(19) Europäisches Patentamt
European Patent Office
Office européen des brevets

(11) **EP 3 498 993 A1**

(12) **EUROPÄISCHE PATENTANMELDUNG**

(43) Veröffentlichungstag:
**19.06.2019 Patentblatt 2019/25**

(51) Int Cl.:
***F01N 3/20*** (2006.01)   ***F01N 13/08*** (2010.01)

(21) Anmeldenummer: **17207691.1**

(22) Anmeldetag: **15.12.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **UMICORE AG & CO. KG**
**63457 Hanau-Wolfgang (DE)**

(72) Erfinder:
• SOEGER, Nicola
61130 Nidderau (DE)
• de Toni, Andrea
63450 Hanau (DE)
• WEN, Fei
63796 Kahl am Main (DE)
• MALMBERG, Stephan
60389 Frankfurt (DE)

(54) **KOMBINATION EINES ZEOLITHBASIERTEN SCR MIT EINEM MANGANBASIERTEN SCR IM BYPASS**

(57)   Die vorliegende Erfindung betrifft ein Abgasnachbehandlungssystem zur selektiven katalytischen Reduktion mit mehreren SCR-Katalysatoren, das sowohl $NO_x$ in einem großen Temperaturbereich zu reduzieren vermag, als auch $SO_x$ speichern kann. Des Weiteren betrifft die vorliegende Erfindung ein Verfahren zur Behandlung eines Abgasstroms, bei dem das erfindungsgemäße Abgasnachbehandlungssystem eingesetzt wird.

Das System umfasst einen HT-SCR für Temperaturbereiche zwischen 250°C und 750°C und einen stromabwärts dazu angeordneten TT-SCR für Temperaturbereiche zwischen 60°C und kleiner als 250°C. Unmittelbar stromaufwärts des HT-SCR befindet sich ein Reduktionsmittel-Zufuhrsystem. Der HT-SCR ist dafür ausgelegt, sowohl $NO_x$ in einem Abgas zu reduzieren, das eine Temperatur oberhalb eines Temperaturschwellenwertes hat als auch im Temperaturbereich unterhalb des Schwellenwertes $SO_x$ zu speichern. Der TT-SCR reduziert $NO_x$ im Temperaturbereich unterhalb des Schwellenwertes. Das Abgas fließt in jedem Fall durch den HT-SCR. Unmittelbar stromaufwärts des TT-SCR ist ein Abgas-Bypass- oder Durchflussregulierungsventil angeordnet. Wenn die Temperatur des Abgases größer oder gleich dem Temperaturschwellenwert ist, wird das Abgas in seiner Gesamtheit am TT-SCR vorbeigeleitet. Der HT-SCR enthält vorteilhaft ein Molsieb als katalytisch aktive Schicht, und die katalytisch aktive Schicht des TT-SCR ist bevorzugt ein manganhaltiges Mischoxid.

EP 3 498 993 A1

**Beschreibung**

**Einleitung**

Die vorliegende Erfindung betrifft ein Abgasnachbehandlungssystem zur selektiven katalytischen Reduktion mit mehreren SCR-Katalysatoren, das sowohl $NO_x$ in einem großen Temperaturbereich zu reduzieren vermag, als auch $SO_x$ speichern kann. Des Weiteren betrifft die vorliegende Erfindung ein Verfahren zur Behandlung eines Abgasstroms, bei dem das erfindungsgemäße Abgasnachbehandlungssystem eingesetzt wird.

**Stand der Technik**

Die im Stand der Technik bekannten SCR-Systeme umfassen SCR-Katalysatoren, die Stickoxide $NO_x$ aus Abgasströmen von Verbrennungsmotoren während des Betriebs in normalen bis hohen Temperaturbereichen effektiv reduzieren, beispielsweise in Temperaturbereichen zwischen etwa 250°C und 450°C. SCR steht hierbei für "selektive katalytische Reduktion" (selective catalytic reduction). Während des Kaltstarts eines Motors aber auch bei schwachlastigem Betrieb können die Abgastemperaturen jedoch auf niedrige Temperaturbereiche zwischen etwa 60°C und etwa 250°C fallen. In diesen Temperaturbereichen gelingt es herkömmlichen SCR-Katalysatoren nicht, $NO_x$ aus Abgasströmen wirkungsvoll zu reduzieren. Grund hierfür ist, dass Motoren im Allgemeinen nur wenig $NO_2$ erzeugen und Oxidationskatalysatoren bei den Temperaturen während des Kaltstarts und der Warmlaufphase (< 150 °C) nicht genug NO in $NO_2$ umwandeln, damit die $NO_x$-Reduktion wirksam wird. Des Weiteren ist es schwierig, in diesem Temperaturbereich aus Harnstoff in ausreichendem Maße Ammoniak für eine wirkungsvolle $NO_x$-Reduktion bereitzustellen, da Thermolyse und Hydrolyse des Harnstoffs zum Teil unvollständig ablaufen. Um in Betriebsbereichen mit niedriger Abgastemperatur mehr NO in $NO_2$ umzuwandeln, kann ein Oxidationskatalysator mit großen Mengen an Platin verwendet werden. Derartige Oxidationskatalysatoren sind kostenaufwändig und können zusätzliche Nachteile mit sich bringen. SCR-Katalysatoren, die besonders für den normalen bis hohen Temperaturbereich geeignet sind, werden nachfolgend als HT-SCR bezeichnet.
Dem Fachmann sind außerdem sogenannte Niedertemperatur-SCR-Katalysatoren bekannt, die Stickoxide bei niedrigen Temperaturen unterhalb eines Temperaturschwellenwertes von 100°C bis 250°C effektiv reduzieren können, zum Teil sogar bei Temperaturen unter 100°C. Diese Niedertemperatur-SCR-Katalysatoren werden nachfolgend als TT-SCR bezeichnet. Es handelt sich dabei um Kombinationen aus einzelnen oder in Mischung vorliegenden Übergangsmetallen oder Übergangsmetall-Oxiden, die auf Oxiden, Mischoxiden oder einer Kombination aus mehreren Oxiden bzw. Mischoxiden aufgebracht sind. Besonders TT-SCR, die manganhaltige Mischoxide oder Mangan bzw. Manganoxid geträgert auf Metalloxiden enthalten, zeigen schon bei tiefen Temperaturen, zum Teil schon unter 100°C, sehr hohe NO-Umsätze. Nachteilig bei diesen manganhaltigen TT-SCR ist jedoch, dass Aktivität und Selektivität bei hohen Temperaturen sehr schlecht sind, so dass z.B. große Mengen an $N_2O$ gebildet werden. Außerdem weisen sie eine geringe Stabilität gegenüber hohen Alterungstemperaturen auf und neigen zur Vergiftung durch $SO_x$, wobei die Möglichkeiten zur Entschwefelung aufgrund der geringen Alterungsstabilität begrenzt sind.
Die DE 11 2011 003 613 T5 beschreibt kombinierte Systeme aus HT- und TT-SCR. Bei Bedarf kann das Abgas über ein einfaches Bypass-System ab einer Grenztemperatur $T_{max}$ an dem Mn-haltigen TT-SCR vorbeigeleitet werden. Derartige Systeme können zwar geeignet sein, die Nachteile der schlechten Aktivität und Selektivität bei hohen Temperaturen sowie der geringen Stabilität gegenüber hohen Temperaturen zu umgehen, jedoch lösen sie das Problem der Schwefelvergiftung des TT-SCR nur unzureichend: Solange Abgas über den TT-SCR geleitet wird, kommt es zu einer Schwefelvergiftung. Eine Regeneration des TT-SCR ist in diesen Konfigurationen aufgrund seiner niedrigen thermischen Stabilität nur bedingt möglich. Systemanordnungen, bei denen der TT-SCR hinter dem HT-SCR angeordnet ist, können die herausragende Aktivität Mnhaltiger SCR-Katalysatoren bei niedrigen Temperaturen nur unzureichend nutzen, da die vorgeschalteten HT-SCR-Katalysatoren erhebliche Mengen an Reduktionsmittel ($NH_3$) einspeichern. Das Reduktionsmittel erreicht also erst nach erheblicher Zeitverzögerung den TT-SCR, was einen weiteren Nachteil darstellt.
Die WO 2016/028290 A1 schlägt vor, die Verschwefelung des SCR-Katalysators durch Vorschalten einer selektiven, alkali- oder erdalkalimetallhaltigen $SO_3$-Falle zu vermeiden. Diese $SO_3$-Falle kann mit einem zweiten SCR-Katalysator in geeigneter Weise kombiniert werden, beispielsweise durch einen Schicht- oder Zonenaufbau. Ist die Kapazität der $SO_3$-Falle erschöpft, erfolgt Austausch des Bauteils oder thermische Regeneration. Die in der WO 2016/028290 A1 vorgeschlagene Lösung zur Vermeidung der Schwefelvergiftung auf einem SCR-Katalysator ist besonders für manganhaltige Katalysatoren ungeeignet. Hierfür ist es nötig, zusätzlich zu $SO_3$ auch $SO_2$ aus dem Abgas zu entfernen. Ein regelmäßiger Austausch der $SO_3$-Falle käme wegen zu kurzer Laufzeiten also nicht in Frage. Eine thermische Regeneration hätte jedoch den Nachteil, dass das aus der $SO_3$-Falle emittierte $SO_3$ zum stromabwärts gelegenen TT-SCR wandert und der Schutz dieses manganhaltigen TT-SCR-Katalysators damit nicht nachhaltig funktioniert.
Weiterhin ist die in der WO 2016/028290 A1 vorgeschlagene Lösung zur Vermeidung der Schwefelvergiftung auf einem SCR-Katalysator für Systeme ungeeignet, in denen ein Oxidationskatalysator vor den SCR-Katalysator geschaltet ist. Der vom Motor emittierte Anteil $SO_3$ am gesamten $SO_x$ ist verhältnismäßig gering. Die Kapazität der $SO_3$-Falle ist somit ausreichend groß, bevor Austausch oder thermische Regeneration erfolgen müssen. Wird jedoch das $SO_x$-haltige Abgas zunächst über einen Oxidationskatalysator geleitet, wird ein großer Anteil zu $SO_3$ oxidiert. Die zu adsorbierende Menge $SO_3$ steigt dadurch erheblich an, so dass Austausch bzw. thermische Regeneration deutlich häufiger erfolgen müssten.

Die WO 2016/018778 A1 offenbart Abgasnachbehandlungssysteme, die einen TT-und einer HT-SCR umfassen. Das Abgasnachbehandlungssystem umfasst ferner einen Bypass: Bei niedrigen Temperaturen wird das Abgas über den TT-SCR geleitet, bei höheren über den HT-SCR. Der TT-SCR enthält ein Gemisch aus katalytisch aktiven Metallen, die bevorzugt auf einem beta-Zeolithen aufgebracht sind. Die Mischung katalytisch aktiver Metalle enthält wenigstens ein Gemisch ausgewählt aus Cu und Ce, Mn und Ce, Mn und Fe, Cu und W und Ce und W sowie mindestens ein Alkalimetall und/oder ein Metall aus der Gruppe der Lanthaniden. Die Offenbarung enthält keine Angaben zur genauen Ausgestaltung der anderen Abgasreinigungskomponenten, d.h. dem DOC, dem HT-SCR und dem DPF. DOC steht hier für "Dieseloxidationskatalysator" (diesel oxidation catalyst), und DPF steht für "Dieselpartikelfilter" (diesel particulate filter). Des Weiteren enthält diese Schrift keine Angaben zu einer möglichen Beeinträchtigung des TT-SCR, falls das Abgas Schwefeloxide $SO_x$ enthält und diese über den TT-SCR geleitet werden.

Niedertemperatur-SCR-Katalysatoren sind beispielsweise in Junhua Li, Huazhen Chang, Lei Ma, Jinming Hao und Ralph T. Yang: "Low-temperature selective catalytic reduction of NOx with NH3 over metal oxide and zeolite catalysts-A review", Catal Today 2011, 175, 147-156 beschrieben. In diesem Review werden TT-SCR mit einem einzigen, Manganoxide enthaltenden Metalloxidkatalysator, Komposit-Metalloxidkatalysatoren auf Basis von Mischungen aus $MnO_2$ und anderen Metalloxiden wie $CeO_2$ und $Nb_2O_5$, auf Metalloxiden wie z.B. $Al_2O_3$ oder $TiO_2$ geträgerte, $MnO_2$-haltige Katalysatoren sowie Cu- oder Fe-haltige Zeolithe miteinander verglichen. TT-SCR, die Manganoxide enthalten, zeigten bei steigender Temperatur des Abgases eine abnehmende Selektivität im Hinblick auf die $N_2$-Bildung. Ein großes Hindernis beim Einsatz $MnO_2$-haltiger TT-SCR ist ihre geringe Widerstandsfähigkeit gegenüber $H_2O$ und $SO_2$. Dies stellt eine Herausforderung für die Anwendung manganhaltiger SCR bei tiefen Temperaturen dar. $SO_x$ im Abgas kann wegen der Belegung der aktiven Zentren des Katalysators mit Mangan- oder Ammoniumsulfaten zu einer Deaktivierung führen. Fe- und Cu-haltige Zeolithe sind wesentlich stabiler gegenüber $SO_2$ und zeigen eine gute thermische Stabilität, weisen aber bei niedrigen Temperaturen deutlich niedrigere $NO_x$-Konversionsraten auf als manganhaltige Katalysatoren. Die Reaktivität von Fe-haltigen Zeolithen bei der $NO_x$-Konversion ist niedriger als die von Cu-Zeolithen. Dafür lässt die Aktivität von Cu-Zeolithen gegenüber $NO_x$ in Gegenwart von $H_2O$ deutlich stärker nach. Dies ist wahrscheinlich auf eine thermische Degradierung des Zeolithträgers und/oder auf die Bildung von Kupferaluminat durch Dealuminierung, die Abnahme der Zahl der aktiven Reaktionszentren durch Umwandlung von $Cu^{2+}$ in CuO, die Umverteilung der Reaktionszentren durch die Wanderung von $Cu^{2+}$ oder eine Kombination dieser Mechanismen zu erklären. Unter den eisenhaltigen Zeolithen weisen Fe-Beta-Zeolithe eine recht gute $NO_x$-Konversionsrate bei niedrigen Temperaturen auf. Dagegen reagieren sie besonders empfindlich auf Kohlenwasserstoffversottung bei unvollständiger Verbrennung des Treibstoffs in Dieselmotoren.

Auf Manganoxid basierende TT-SCR-Katalysatoren wurden auch in Chang Liu, Jian-Wen Shi, Chen Gao und Chunming Niu:"Manganese oxide-based catalysts for low temperature selective catalytic reduction of NOx with NH3: A review", Appl Catal A2016, 522, 54-69 beschrieben. Die untersuchten Katalysatoren wurden in vier Kategorien unterteilt: einfache $MnO_x$-Katalysatoren, manganbasierte Metalloxidgemische, geträgerte manganbasierte Metalloxidgemische und manganbasierte monolithische Katalysatoren. Es zeigte sich, dass manganbasierte Metalloxidgemische, beispielsweise aus Fe- und Mn-Oxiden, die höchste Widerstandsfähigkeit gegenüber $H_2O$ und $SO_2$ aufwiesen. Dennoch sind diese Systeme für den praktischen Anwendungsfall noch zu anfällig, um sie ohne zusätzliche Vorkehrungen betreiben zu können.

In Isabella Nova, Enrico Tronconi (Hrsg.): "Urea-SCR Technology for deNOx After Treatment of Diesel Exhausts", Fundamental and Applied Catalysis, Springer-Verlag 2014, Kap. 5, S. 123-147, werden SCR-Katalysatoren auf Basis von Cu-Zeolithen, Fe-Zeolithen und Vanadium für die $NO_x$-Abgasreinigung bei Dieselfahrzeugen beschrieben. Als V-SCR-Katalysatoren können sogenannte Mischoxid-Katalysatoren verwendet werden, die auf Oxiden des Vanadiums basieren und die in der Regel noch Oxide des Titans und weiterer Metalle, etwa des Wolframs, enthalten.

Bis heute ist es nicht gelungen, ein SCR-System bereitzustellen, dass in der Lage ist, in niedrigen (60°C bis kleiner als 250°C), mittleren (250°C bis kleiner als 450°C) und hohen Temperaturbereichen (450°C bis 700°C), d.h. von rund 60°C bis rund 700°C, Stickoxide aus Abgasen effektiv zu reduzieren. HT-SCRs arbeiten erst in mittleren bis hohen Temperaturbereichen effektiv, und TT-SCRs zeigen bei hohen Temperaturen geringe Aktivitäten und Selektivitäten, sind bei hohen Alterungstemperaturen nicht stabil und werden leicht durch $SO_x$ im Abgasstrom vergiftet. Daher besteht Bedarf an SCR-Systemen, die die Nachteile des Standes der Technik überwinden.

**Aufgabe der Erfindung**

Aufgabe der vorliegenden Erfindung ist es, ein SCR-System bereitzustellen, das Stickoxide aus Abgasen von Verbrennungsmotoren in niedrigen (60°C bis kleiner als 250°C), mittleren (250°C bis kleiner als 450°C) und hohen Temperaturbereichen (450°C bis 700°C) effektiv reduziert, eine hohe Aktivität, Selektivität und Temperaturstabilität aufweist und durch $SO_x$ im Abgasstrom nicht vergiftet wird. Eine weitere Aufgabe der vorliegenden Erfindung besteht in einem Verfahren zur Behandlung eines Abgasstroms, das ein solches SCR-System umfasst.

**Lösung der Aufgabe**

Die Aufgabe, ein SCR-System bereitzustellen, das Stickoxide aus Abgasen von Verbrennungsmotoren in niedrigen, mittleren und hohen Temperaturbereichen effektiv reduziert, eine hohe Aktivität, Selektivität und Temperaturstabilität aufweist und durch $SO_x$ im Abgasstrom nicht vergiftet wird, wird erfindungsgemäß gelöst durch ein Abgasnachbehandlungssystem, das derart an einen Verbrennungsmotor gekoppelt werden kann, dass es den Abgasstrom empfängt, umfassend

- einen Katalysator für die selektive katalytische Reduktion für mittlere bis hohe Temperaturbereiche (HT-SCR), wobei der mittlere Temperaturbereich Temperaturen von 250°C bis kleiner als 450°C und der hohe Temperaturbereich Temperaturen von 450°C bis 750° umfasst, der sowohl dafür ausgelegt ist,

   - $NO_x$ in einem Abgas zu reduzieren, das eine Temperatur oberhalb eines Temperaturschwellenwertes hat, als auch

   - über den Temperaturbereich des Abgases, der unterhalb eines Temperaturschwellenwerts liegt, das im Abgas enthaltene $SO_x$ zu speichern,

- ein stromaufwärts unmittelbar vor dem HT-SCR angeordnetes Reduktionsmittel-Zufuhrsystem,

- einen stromabwärts zum HT-SCR angeordneten Niedertemperatur-SCR (TT-SCR), wobei der Niedertemperaturbereich Temperaturen von 60°C bis kleiner als 250°C umfasst und wobei der TT-SCR dafür ausgelegt ist, $NO_x$ in einem Abgas zu reduzieren, das eine Temperatur unterhalb eines Temperaturschwellenwertes hat,

- einen Temperatursensor, der unmittelbar hinter dem HT-SCR angeordnet ist und die Temperatur des Abgasstroms misst, der diesen HT-SCR verlässt,

- ein Abgas-Bypass- und/oder Durchflussregulierungs-Ventil, welches dafür ausgelegt ist, den Abgasstrom in seiner Gesamtheit am TT-SCR vorbeizuleiten, wenn dieser Abgasstrom eine Temperatur größer oder gleich einem Temperaturschwellenwert hat, wobei das Abgas-Bypass- und/oder Durchflussregulierungsventil unmittelbar stromaufwärts des TT-SCR-angeordnet ist.

Das neue SCR-System sowie das Verfahren zur Behandlung eines Abgasstroms, welches das neue SCR-System umfasst, sind nachfolgend erläutert. Dabei umfasst die Erfindung alle aufgeführten Ausführungsformen sowohl einzeln als auch in Kombination miteinander.
Ein "Abgasstrom" im Sinne der vorliegenden Erfindung bezieht sich dabei auf einen Abgasstrom aus einem Verbrennungsmotor, unabhängig vom verbrannten Kraftstoff. Bei den Verbrennungsmotoren kann es sich beispielsweise um Otto- oder Magermotoren handeln. Vorteilhaft handelt es sich bei Magermotoren um Dieselmotoren. Der Begriff "Dieselmotoren" umfasst hierbei sowohl Leichtlastdieselmotoren (LDD) als auch Schwerlastdieselmotoren (HDD).
Überraschend wurde gefunden, dass bestimmte, nachfolgend erläuterte HT-SCR-Katalysatoren, die Cu- oder Fe-basierte Zeolithe als katalytisch aktive Komponente enthalten, nicht nur Stickoxide in normalen bis hohen Temperaturbereichen effizient zu Stickstoff reduzieren, sondern in niederen bis mittleren Temperaturbereichen auch Schwefeloxide $SO_x$ quantitativ speichern und somit einen nachgeschalteten TT-SCR wirkungsvoll vor einer Vergiftung durch $SO_x$ schützen können. Die vorliegende Erfindung nutzt diesen Effekt, indem der Abgasstrom grundsätzlich zunächst durch den HT-SCR geleitet wird. Er speichert $SO_x$ auch in niedrigen Temperaturbereichen und entfernt diese Komponente damit aus dem Abgasstrom. Dadurch wird eine Vergiftung des nachgeschalteten TT-SCR durch SOx verhindert. In niedrigen Temperaturbereichen dient der HT-SCR damit als $SO_x$-Falle, während die Stickoxide $NO_x$ vollständig oder zumindest zum größten Teil im TT-SCR reduziert werden, da der HT-SCR in niedrigen Temperaturbereichen gar keine oder nur sehr geringe $NO_x$-Konversionsraten aufweist. Im normalen bis hohen Temperaturbereich wirkt der HT-SCR dagegen nicht nur weiterhin als $SO_x$-Falle, sondern übernimmt zusätzlich auch die $NO_x$-Konversion. Bei Überschreiten eines Temperaturschwellenwertes wird der Abgasstrom über einen Bypass am TT-SCR vorbeigeleitet. Diese Betriebsstrategie bietet mehrere Vorteile. Zum einen wird verhindert, dass der TT-SCR durch den heißen Abgasstrom beschädigt wird. Zum anderen wird der TT-SCR durch diese Maßnahme vor $SO_x$ Emissionen geschützt, die in hohen Temperaturbereichen aus dem HT-SCR freigesetzt werden oder aufgrund der erhöhten Temperaturen nicht mehr vollständig eingespeichert werden können. Die Wahl des Temperaturschwellenwertes für eine ganz bestimmte Ausführungsform der vorliegenden Erfindung ergibt sich aus der vorliegenden Abgastemperatur; dem Abgasmassenstrom, der Schwefelkonzentration im Abgas, der Größe des HT-SCR und der Temperatursensitivität des TT-SCR. Diese Faktoren werden im Wesentlichen durch den endgültigen Anwendungsfall bestimmt. Daher ist auch der Temperaturschwellenwert eine Größe, die vom jeweiligen Anwendungsfall abhängt und durch den Endanwender bestimmt wird. Dem Fachmann ist das geschilderte Phänomen bekannt, und er kann den Temperaturschwellenwert bestimmen, ohne den Schutzbereich der vorliegenden Erfindung zu verlassen. Vorteilhaft liegt der Temperaturschwellenwert bei einer Temperatur über 250°C bzw. größer oder gleich der Light off-Temperatur des HT-SCR.

Unter einem "niedrigen" Temperaturbereich werden dabei Temperaturen von 60°C bis kleiner 250°C verstanden, unter einem "mittleren" Temperaturen von 250°C bis kleiner 450°C, und unter einem "hohen" Temperaturen von 450°C bis 700°C.

Unter dem Begriff "Vergiftung" eines Katalysators wird im Rahmen der vorliegenden Erfindung verstanden, dass ein Stoff derart auf einem Katalysator einwirkt, dass er die Wirkung des Katalysators verringert oder aufhebt. "Dauerhaft" bedeutet in diesem Zusammenhang "einen langen Zeitraum überdauernd, beständig, lange anhaltend". Eine "dauerhafte Vergiftung eines Katalysators" ist demzufolge eine Einwirkung eines Stoffes auf einen Katalysator dergestalt, dass die Wirkung dieses Katalysators über einen langen Zeitraum, beständig, lange anhaltend verringert oder aufgehoben wird und dieser Effekt nicht reversibel ist.

Das erfindungsgemäße SCR-System reduziert Stickoxide aus Abgasen von Verbrennungsmotoren in niedrigen, mittleren und hohen Temperaturbereichen effektiv. "Effektiv" bedeutet dabei, dass die Stickoxide wirksam und wirkungsvoll reduziert werden.

Des Weiteren weist das erfindungsgemäße SCR-System eine hohe Aktivität, Selektivität und Temperaturstabilität auf. Wie oben ausgeführt, umfasst das erfindungsgemäße SCR-System einen HT-SCR und einen TT-SCR, d.h. zwei Katalysatoren. Dem Fachmann ist bekannt, dass die Leistung eines Katalysators danach beurteilt wird, in welchem Maß er die Geschwindigkeit einer chemischen Reaktionen erhöht (Katalysatoraktivität) ihren Verlauf beeinflusst (Katalysatorselektivität), und wie lange seine Wirksamkeit anhält (Katalysatorstandzeit). Die Katalysatoraktivität ist also ein Maß dafür, wie schnell der Katalysator Edukte zu Produkten umsetzt. Im Falle von SCR-Katalysatoren sind die Edukte Stickoxide ($NO_x$) und Reduktionsmittel, und bei den Produkten handelt es sich um Stickstoff ($N_2$) und Wasser. Die Katalysatorselektivität beschreibt dagegen das Phänomen, dass bei einer Reaktion bevorzugt eines von mehreren möglichen Reaktionsprodukten gebildet wird. Im Falle von SCR-Katalysatoren können bei der Reaktion von $NO_x$ mit Reduktionsmitteln sowohl $N_2$ als auch $N_2O$ gebildet werden, wobei $N_2$ erwünscht und $N_2O$ unerwünscht ist. Vorteilhaft sind daher SCR-Katalysatoren mit hoher Selektivität für die Bildung von $N_2$.

Ein "temperaturstabiler" Katalysator ist auch bei relativ hohen Temperaturen hitzeresistent. Die Resistenz bezieht sich dabei vor allem auf die Struktur der katalytisch aktiven Beschichtung sowie des Trägersubstrats, die beide nachfolgend näher erläutert werden. "Temperaturstabilität" wird im Zusammenhang mit Katalysatoren jedoch auch anwendungsspezifisch als Fähigkeit zur Ausübung einer bestimmten Funktion definiert. Im Rahmen der vorliegenden Erfindung sind "temperaturstabile" SCR-Systeme solche Anordnungen, die einen HT-SCR und einen TT-SCR umfassen, wobei die SCR-Systeme derart ausgestaltet sind, dass sie den genannten niedrigen, mittleren und hohen Temperaturbereichen einerseits hitzeresistent und andererseits Stickoxide zu Stickstoff reduzieren. Dies wird erreicht, indem abhängig vom Temperaturschwellenwert und von der aktuellen Abgastemperatur das Abgas entweder nur durch den stromaufwärts gelegenen HT-SCR oder erst durch den HT-SCR und danach durch den stromabwärts gelegenen TT-SCR geleitet wird.

Im Rahmen der vorliegenden Erfindung liegen sowohl der HT-SCR als auch der TT-SCR vorteilhaft in Form einer katalytisch aktiven Beschichtung auf einem Trägersubstrat vor. Trägersubstrate können sogenannte Durchflusssubstrate oder auch Wandflussfilter sein. Beide können aus inerten Materialien, beispielsweise aus keramischen Materialien wie Silicium-Carbid, Aluminium-Titanat oder Cordierit, bestehen. Alternativ kann es sich bei dem inerten Material im Falle eines Durchflusssubstraten um Metallsubstrate handeln. Im Rahmen der vorliegenden Erfindung können die Trägersubstrate beider SCR aus inerten Materialien bestehen, oder beide bestehen aus Metallsubstraten, oder einer der beiden SCR weist ein Trägersubstrat aus einem inerten keramischen Material und der andere ein Trägersubstrat aus Metall auf. Die genannten Trägersubstrate sind dem Fachmann bekannt und am Markt erhältlich.

Die Trägersubstrate können aber auch selbst katalytisch aktiv sein und katalytisch aktives Material, etwa SCR-katalytisch aktives Material, enthalten.

Als SCR-katalytisch aktive Materialien für die erfindungsgemäß einzusetzenden HT-SCR-Katalysatoren werden Cu- und/oder Fe-enthaltende Zeolithe eingesetzt.

Als SCR-katalytisch aktive Materialien für den TT-SCR werden dem Fachmann bekannte Materialien auf Mischoxid-Basis eingesetzt, die Manganverbindungen enthalten.

Neben dem katalytisch aktiven Material enthalten diese Trägersubstrate eine Matrixkomponente. Als Matrixkomponenten können alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

In anderen Ausführungsformen des erfindungsgemäßen Katalysators liegt er selbst als Bestandteil eines Trägersubstrates vor, also zum Beispiel eines Durchflusssubstrates oder auch Wandflussfilters. Solche Trägersubstrate enthalten daneben die schon oben beschriebenen Matrixkomponenten.

Erfindungsgemäße Katalysatoren enthaltende Trägersubstrate können als solche bei der Abgasreinigung eingesetzt werden. Sie können aber auch ihrerseits mit katalytisch aktiven Materialien, zum Beispiel SCR-katalytisch aktiven Materialien, beschichtet werden. Soweit diese Materialien SCR-katalytisch aktiv sein sollen, kommen die oben genannten SCR-Katalysatoren in Frage.

Zur Herstellung katalytisch aktiver Trägersubstrate wird zum Beispiel eine Mischung aus beispielsweise 10 bis 95 Gew.-% inerter Matrixkomponente und 5 bis 90 Gew.-% katalytisch aktiven Materials nach an sich bekannten Verfahren extrudiert. Wie bereits oben beschrieben können als Matrixkomponenten alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Das Aufbringen des erfindungsgemäßen Katalysators auf das inerte oder selbst katalytisch aktive Trägersubstrat sowie das Aufbringen einer katalytisch aktiven Beschichtung auf ein Trägersubstrat, das einen erfindungsgemäßen Katalysator umfasst, kann nach dem Fachmann geläufigen Methoden erfolgen, so etwa nach den üblichen Tauchbeschichtungsverfahren bzw. Pump- und Saug-Beschichtungs-verfahren mit sich anschließender thermischer Nachbehandlung (Kalzination).

Dem Fachmann ist bekannt, dass im Falle von Wandflussfiltern dessen durchschnittliche Porengröße und die mittlere Teilchengröße des erfindungsgemäßen Katalysators so aufeinander abgestimmt werden können, dass die resultierende Beschichtung auf den porösen Wänden, die die Kanäle des Wandflussfilters bilden, liegen (auf-Wand-Beschichtung). Bevorzugt werden aber durchschnittliche Porengröße und mittlere Teilchengröße so aufeinander abgestimmt, dass sich der erfindungsgemäße Katalysator in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße des erfindungsgemäßen Katalysators klein genug sein, um in die Poren des Wandflussfilters einzudringen.

Nachfolgend werden die Begriffe "katalytisch aktive Beschichtung" und "katalytisch aktive Schicht" synonym verwendet.

Vorteilhaft liegt der erfindungsgemäß einzusetzende HT-SCR in Form einer katalytisch aktiven Schicht auf einem Trägersubstrat vor, wobei es sich bei der katalytisch aktiven Schicht um ein Molsieb handelt, ausgewählt aus

- einem Aluminosilikat mit einem SAR von 5-50 und einem Siliciumaluminium-phosphat (SAPO) mit einem (Al+P)/Si-Wert von 4-15 ausgewählt ist,

- wobei das Molsieb 1-10 Gew.-% eines Übergangsmetalls enthält, ausgewählt aus Fe, Cu und Gemischen davon, berechnet als $Fe_2O_3$ bzw. CuO bezogen auf das Gesamtgewicht des Molsiebs,

- und worin das Molsieb Alkali- und Erdalkalimetall-Kationen ausgewählt aus Li, Na, K, Rb, Cs, Mg, Ca, Sr, Ba und Gemischen davon in einer Gesamtmenge von $\leq$ 1 Gew.-% enthält, berechnet in Form der reinen Metalle und bezogen auf das Gesamtgewicht des Molsiebs,

- und worin das Molsieb die Metalle Co, Mn, Cr, Zr und Ni in einer Gesamtmenge von $\leq$ 1 Gew.-%, berechnet in Form der reinen Metalle und bezogen auf das Gesamtgewicht des Molsiebs, enthält.

Der Begriff "SAR" steht hierbei für "silica to alumina ratio", d.h. für das molare Verhältnis von $SiO_2$ zu $Al_2O_3$ eines Aluminosilikat-Zeolithen.

Bei Siliciumaluminiumphosphaten, auch als "SAPOs" bezeichnet, wird dagegen der (Al+P)/Si-Wert angegeben. Dabei handelt es sich um die Summe der Stoffmengen von Aluminium und Phosphor geteilt durch die Stoffmenge an Silicium.

Handelt es sich bei dem Molsieb um ein SAPO, so betragt dessen Gehalt an $Al_2O_3$ 30 bis 45 Gew.-%, bevorzugt 36 bis 42 Gew.-% und besonders bevorzugt 38 Gew.-%. Der Gehalt and $P_2O_5$ beträgt 30 bis 50 Gew.-%, bevorzut 42 bis 50 Gew.-% und besonders bevorzugt 49 Gew.-%. Der Gehalt an $SiO_2$ betragt 5 bis 20 Gew.-%, bevorzugt 9 bis 15 Gew.-% und besonders bevorzugt 10 Gew.-%. Aus diesen Bereichen für die Gehalte an $Al_2O_3$, $P_2O_5$ und $SiO_2$ ergeben sich (Al+P)/Si-Werte von 4 bis 15, bevorzugt 6 bis 10, besonders bevorzugt 8 bis 9 und ganz besonders bevorzugt von 8,6.

Handelt es sich bei dem Molsieb um ein Aluminosilikat, so beträgt der SAR 5 bis 50, bevorzugt 10 bis 35, besonders bevorzugt 12 bis 30 und ganz besonders bevorzugt 30.

Das Molsieb enthält 1 bis 10 Gew.-%, bevorzugt 1 bis 9 Gew.-%, besonders bevorzugt 2,5 bis 7 Gew.-% und ganz besonders bevorzugt 3,5 bis 4,5 Gew.-%, eines Übergangsmetallsausgewählt aus Eisen, Kupfer und Gemischen davon, berechnet als $Fe_2O_3$ bzw. CuO und bezogen auf das Gesamtgewicht des Molsiebs.

In einer Ausführungsform enthält das Molsieb 1 bis 10 Gew.-% Fe, bevorzugt 3 bis 9 Gew.-% Fe, besonders bevorzugt 4 bis 7 Gew.-% Fe und ganz besonders bevorzugt 3,5 Gew.-% Fe, jeweils berechnet als $Fe_2O_3$ und bezogen auf das Gesamtgewicht des Molsiebs.

In einer weiteren Ausführungsform enthält das Molsieb 1 bis 10 Gew.-% Cu, bevorzugt 1 bis 7 Gew.-% Cu, besonders bevorzugt 2,5 bis 4 Gew.-% Cu und ganz besonders bevorzugt 4,5 Gew.-% Cu, jeweils berechnet als CuO und bezogen auf das Gesamtgewicht des Molsiebs.

Des Weiteren enthält das Molsieb Alkali- und Erdalkalimetallkationen, ausgewählt aus Li, Na, K, Rb, Cs, Mg, Ca, Sr, Ba und Gemischen davon in einer Gesamtmenge von ≤ 1 Gew.-%, berechnet in Form der reinen Metalle und bezogen auf das Gesamtgewicht des Molsiebs. Bevorzugt beträgt die Gesamtmenge dieser Alkali- und Erdalkalimetallkationen 0 bis 0,7 Gew.-%, besonders bevorzugt 0 bis 0,5 Gew.-% und ganz besonders bevorzugt 0,005 bis 0,4 Gew.-%.

In einer Ausführungsform der vorliegenden Erfindung handelt es sich bei dem Molsieb, das die katalytisch aktive Schicht des HT-SCR darstellt, um SAPO-34. Der (Al+P)/Si-Wert sowie die Gehalte an CuO und/oder $Fe_2O_3$, der Alkali- und Erdalkalimetallgehalt sowie der Gehalt der Metalle Co, Mn, Cr, Zr und Ni entsprechen dabei den obigen Angaben.

In einer weiteren Ausführungsform der vorliegenden Erfindung ist das Molsieb, das die katalytisch aktive Schicht des HT-SCR darstellt, ausgewählt aus kleinporigen Zeolithen mit einer maximalen Porengröße von acht tetraedrischen Atomen und beta-Zeolith. Die Gehalte an CuO und/oder $Fe_2O_3$, der Alkali- und Erdalkalimetallgehalt sowie der Gehalt der Metalle Co, Mn, Cr, Zr und Ni entsprechen dabei den obigen Angaben.

Dem Fachmann ist bekannt, dass Zeolithe nach ihrer Porengröße klassifiziert werden. Die Porengröße wird definiert durch die Ringgröße der größten Porenöffnung. Großporige Zeolithe weisen eine maximale Ringgröße von 12 tetraedrischen Atomen auf, mittelporige haben eine maximale Ringgröße von 10 und kleinporige Zeolithe eine maximale Ringgröße von 8 tetraedrischen Atomen. Kleinporige Zeolithe sind beispielsweise ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON.

Zeolithe mit mittlerer Porengröße sind beispielsweise FER, MFI, ZSM-57 und SUZ-4.

Großporige Zeolithe sind beispielsweise FAU, BEA, ZSM-3, ZSM-4, ZSM-10, ZSM-12, ZSM-20, Zeolith Omega, Zeolith L, ZeolitH X, REY, USY, RE-USY und MOR.

In einer besonders vorteilhaften Ausführungsform ist der HT-SCR ein Fe-BEA mit einem SAR von 5 bis 30, einem Alkalimetallgehalt von 0-0,7 Gew.-%, besonders bevorzugt 0-0,5 Gew.-%, berechnet als reine Metalle, und einem Fe-Gehalt von 3 bis 9 Gew.-%, bseonders bevorzugt 4,5 Gew.-%, berechnet als $Fe_2O_3$, wobei der Alkalimetall- und Fe-Gehalt jeweils auf das Gesamtgewicht des Zeolithen bezogen sind.

In einer weiteren besonders vorteilhaften Ausführungsform ist der HT-SCR ein Cu-CHA mit einem SAR von 10 bis 35, einem Alkalimetallgehalt von 0-07 Gew.-%, besonders bevorzugt 0-0,5 Gew.-%, berechnet als reine Metalle, und einem Cu-Gehalt von 1 bis 7 Gew.-%, besonders bevorzugt 3,5 Gew.-%, berechnet als CuO, wobei der Alkalimetall- und Cu-Gehalt jeweils auf das Gesamtgewicht des Zeolithen bezogen sind.

In einer weiteren Ausführungsform ist das Molsieb aufgebracht als eine oder mehrere Schichten auf einem Durchflusswabenkörper. Es können zusätzlich Binder, z.B. ausgewählt aus $SiO_2$, $Al_2O_3$, $ZrO_2$ oder Kombinationen davon in den Schichten enthalten sein. Geeignete Binder umfassen außerdem Boehmit und Silicagel.

Vorteilhaft umfasst der erfindungsgemäß einzusetzende TT-SCR ein monolithisches Durchflusssubstrat mit einer manganhaltigen Beschichtung als katalytisch aktiver Schicht.

Vorteilhaft handelt es sich bei der manganhaltigen Beschichtung um ein manganhaltiges Mischoxid handelt, ausgewählt aus

- Mischoxiden der allgemeinen Formel $Mn_aMe_{1-a}O_b$, worin es sich bei Me um ein oder mehrere Elemente aus der Gruppe Fe, Co, Ni, Cu, Zr, Nb, Mo, W, Ag, Sn, Ce, Pr, La, Nd, Ti und Y handelt und worin a = 0,02-0,98, und b = 1,0-2,5 sind,

- Mischoxiden der allgemeinen Formel $Mn_wCe_xMe_{1-w-x}O_y$, worin es sich bei Me um ein oder mehrere Elemente der aus der Gruppe Fe, Co, Ni, Cu, Zr, Nb, Mo, W, Ag, Sn, Pr, La, Nd, Ti und Y handelt und worin w = 0,02-0,98, x =0,02-0,98, und y =1,0-2,5 sind,

- Spinellen der allgemeinen Formel $MnMe_2O_4$ oder $MeMn_2O_4$, worin es sich bei Me um Fe, Al, Cr, Co, Cu oder Ti handelt.

Handelt es sich bei der manganhaltigen Beschichtung um ein Mischoxid der allgemeinen Formel $Mn_aMe_{1-a}O_b$, so ist Me ausgewählt aus der Gruppe Fe, Co, Ni, Cu, Zr, Nb, Mo, W, Ag, Sn, Ce, Pr, La, Nd, Ti und Y. Dabei ist a = 0,02-0,98, und b = 1,0-2,5. Besonders vorteilhaft ist Me ausgewählt aus Fe, Cu, Nb, Mo, W, Sn und Ti.

Handelt es sich bei der manganhaltigen Beschichtung um ein Mischoxid der allgemeinen Formel $Mn_wCe_xMe_{1-w-x}O_y$, so ist Me ausgewählt aus der Gruppe Fe, Co, Ni, Cu, Zr, Nb, Mo, W, Ag, Sn, Ce, Pr, La, Nd, Ti und Y. Dabei ist w = 0,02-0,98, x =0,02-0,98, und y =1,0-2,5. Besonders vorteilhaft ist Me ausgewählt aus Fe, Cu, Nb, Mo, W, Sn und Ti.

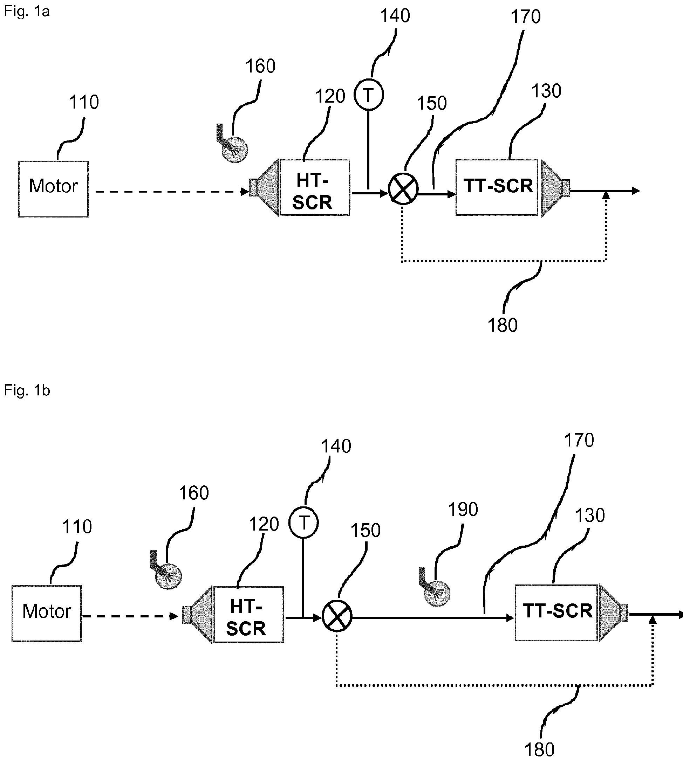

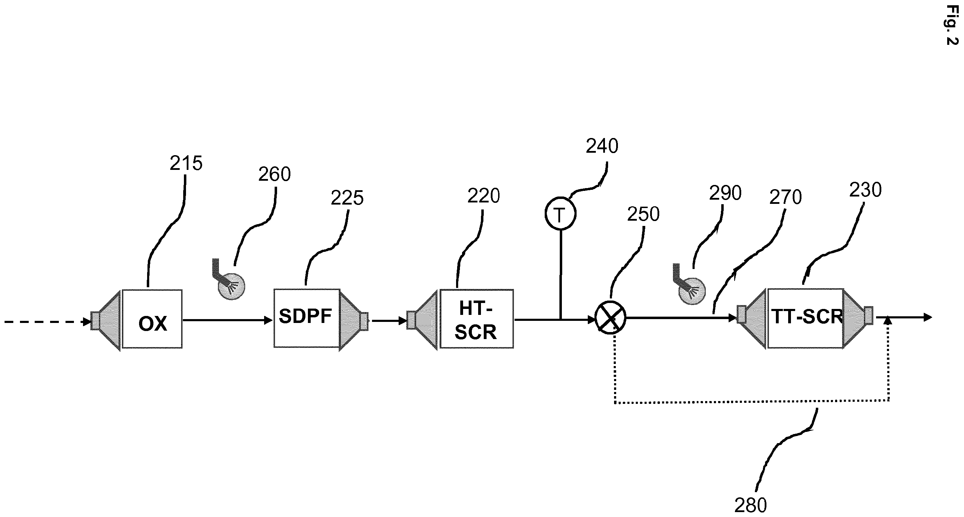

Nachfolgend werden die Komponenten des Abgasnachbehandlungssystems erläutert, die zusätzlich zum HT-SCR und TT-SCR vorhanden sind oder vorhanden sein können. Wenn dabei von einem DPF die Rede ist, so kann es sich um einen DPF, SDPF oder CDPF handeln. Fig. 1a und 1b zeigen beispielhaft das Grundprinzip der vorliegenden Erfindung, nämlich die Anordnung von HT-SCR und TT-SCR im Bypass. Die Fig. 2a bis 5 zeigen weitere Ausgestaltungen der Erfindung, bei denen weitere Komponenten des Abgasreinigungssystems dargestellt sind.

Erfindungsgemäß ist unmittelbar stromaufwärts vor dem HT-SCR ein Reduktionsmittelzufuhrsystem angeordnet. Das Reduktionsmittelzufuhrsystem umfasst in einer Ausführungsform eine Reduktionsmittelquelle, -pumpe und -abgabevorrichtung oder -einspritzvorrichtung (nicht dargestellt). Der genaue Aufbau des Reduktionsmittelzufuhrsystems kann auch durch die Art des Reduktionsmittels bestimmt werden. Zum Beispiel kann in einer weiteren Ausführungsform bei der Dosierung von Flüssigkeiten auf eine Pumpe verzichtet werden, sofern der Behälter oder Tank, welcher das Reduktionsmittel enthält, derart angebracht ist, dass die Förderung zur Reduktionsmittelabgabevorrichtung oder -einspritzvorrichtung durch die Schwerkraft erfolgt. Dem Fachmann sind die verschiedenen technischen Lösungen bekannt, und er kann beliebige Reduktionsmittelzufuhrsysteme verwenden, ohne den Schutzbereich der Patentansprüche zu verlassen.

Bei der Reduktionsmittelquelle kann es sich um einen Behälter oder Tank handeln, der ein Reduktionsmittel, wie beispielsweise Ammoniak ($NH_3$), Harnstoff oder eine andere $NH_3$-Speicherquelle wie z.B. Carbamate; Formiate oder auch Metallsalze (z.B. $Sn(NH_3)_8Cl_2$), welche sich unter Ammoniakbildung zersetzen, aufnehmen kann.

Vorteilhaft ist die Reduktionsmittelquelle ausgewählt aus wässrigen Lösungen von Ammoniak, Harnstoff, Ammoniumcarbamat, Ammoniumformiat, Ammoniumacetat, Ammoniumpropionat, Guanidiniumformiat, Methanamid und Gemischen der genannten wässrigen Lösungen.

Alternativ können auch feste stickstoffhaltige Reduktionsmittelquellen verwendet werden, die zu reduktiven bzw. reaktiven Bestandteilen, insbesondere Ammoniak ($NH_3$) verdampft werden. Hierfür geeignete Feststoffe sind beispielsweise Ammoniumcarbamat, Ammoniumcarbonat, Ammoniumformiat, Ammoniumacetat, Ammoniumpropionat und Metallaminsalze. Der Einsatz dieser Feststoffe sowie ein Verfahren zur Erzeugung eines gasförmigen Reduktionsmittels für die Reduktion von Stickoxiden in sauerstoffhaltigen Abgasen aus einem festen Reduktionsmittel sind beispielsweise in der DE 101 01 364 A1 und der WO 2008/119492 A1 beschrieben.

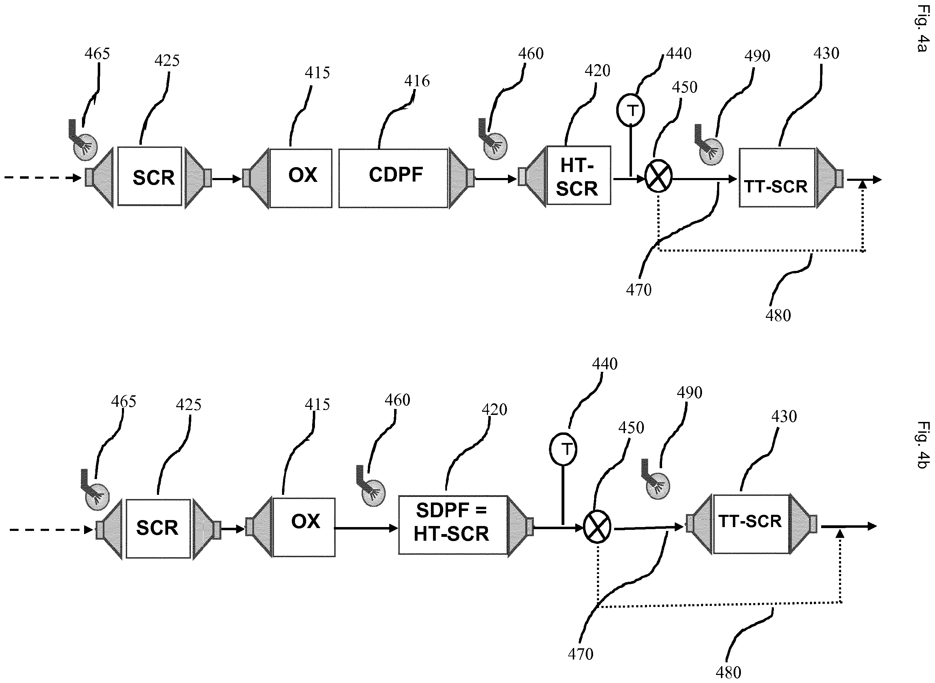

Die Reduktionsmittelquelle ist derart mit der Pumpe verbunden, dass sie Reduktionsmittel liefert, wobei die Pumpe dafür ausgelegt ist, Reduktionsmittel von der Reduktionsmittelquelle zur Abgabevorrichtung zu pumpen. Die Abgabevorrichtung kann. wie z.B. in Fig. 1a, eine Reduktionsmitteleinspritzvorrichtung oder -dosiervorrichtung umfassen, die stromaufwärts des Bypass-Ventils 150 und des HT-SCR-Katalysators 120 angeordnet ist. In alternativen Ausführungsformen kann die Reduktionsmitteleinspritzvorrichtung an anderen Stellen des Nachbehandlungssystems angeordnet sein, wie etwa stromaufwärts des DOC in den Fig. 4a und 4b. In der erläuterten Ausführungsform kann die Einspritzvorrichtung selektiv gesteuert werden, um Reduktionsmittel direkt in den Abgasstrom einzuspritzen, bevor dieser durch das Bypass-Ventil 150 gelangt.

In einer weiteren Ausführungsform, wie z.B. in Fig. 2 kann das Reduktionsmittel-Zufuhrsystem mehr als eine Reduktionsmitteleinspritzvorrichtung umfassen, wodurch HT-SCR 220 und TT-SCR 230 unabhängig voneinander Reduktionsmittel zugeführt werden kann. Diese Betriebsweise ist besonders vorteilhaft, um dem TT-SCR eine sehr kurze Anspringzeit zu ermöglichen, da das Reduktionsmittel vorher nicht durch den HT-SCR strömen muss und dort ggf. adsorbiert wird.

In allen Ausführungsformen reagiert das Reduktionsmittel in den SCR-Katalysatoren mit $NO_x$, um es zu unschädlichen Emissionen $N_2$ und $H_2O$ zu reduzieren.

Das Motorsystem 110 umfasst weiterhin verschiedenartige physikalische und/oder virtuelle Sensoren wie etwa Abgastemperatursensoren. Vorteilhaft sind solche Sensoren stromabwärts des Motors 110 und stromaufwärts des Turboladers sowie stromaufwärts des DOC und DPF (siehe Fig. 2, 3a, 3b, 4a und 4b) angeordnet. Für die Regelung des Bypass-Ventils 150 und einer möglichen Reduktionsmitteldosierung stromabwärts des HT-SCR bzw. stromaufwärts des TT-SCR ist es Vorteilhaft stromaufwärts des Bypass und/oder Durchflussregulierungsventils einen Temperatursensor 140 zu verwenden. Der Abgastemperatursensor 140 ist stromabwärts des HT-SCR 120 und stromaufwärts des Bypass-Ventils 150 angeordnet. Bei den Abgastemperatursensoren kann es sich um physikalische Sensoren und/oder virtuelle Sensoren handeln, die dafür ausgelegt sind, eine Temperatur von Abgas, das den Motor 110 verlässt, beziehungsweise eine Temperatur von Abgas, das den HT-SCR 120 verlässt, zu bestimmen (z. B. zu detektieren, zu schätzen oder zu simulieren). Obgleich sie nicht dargestellt sind, kann das Motorsystem 110 verschiedenartige weitere Sensoren enthalten, wie etwa einen Differentialdrucksensor zur Bestimmung eines Druckunterschiedes beiderseits des DPF in den Fig. 2, 3a, 3b, 4a und 4b Massenfluss-Sensoren zur Bestimmung der massenbezogenen Abgasflussrate und Abgaseigenschaftssensoren zur Bestimmung der massenbezogenen Konzentrationen verschiedenartiger Verbindungen im Abgas, wie etwa $NO_x$, Sauerstoff, Stickstoff, Ammoniak und Ähnlichem. Die verschiedenartigen Sensoren können zweckmäßig im gesamten Motorsystem 110 angeordnet sein und können mit dem Steuergerät in Verbindung stehen, um die Betriebsbedingungen des Systems zu überwachen, zu steuern und zu regeln.

Abgas-Bypass- oder Durchflussregulierungsventil:

Entsprechend einiger Umsetzungen des Systems ist das Abgas-Bypass- und/oder Durchflussregulierungsventil dafür ausgelegt, den gesamten Abgasstrom durch den Niedertemperatur-SCR-Katalysator zu leiten, wenn eine Temperatur des Abgasstroms unterhalb der Mindestbetriebstemperatur des HT-SCR-Katalysators liegt und der HT-SCR noch keine hohen Konversionsraten aufweist. Die Mindestbetriebstemperatur kann niedriger als der Temperaturschwellenwert sein. Das Abgas-Bypass- und/oder Durchflussregulierungsventil kann die Menge des Abgasstroms, welche durch den Niedertemperatur-SCR-Katalysator fließt, schrittweise von 100% bis 0% des Abgasstroms senken, wenn die Temperatur des Abgasstroms in entsprechendem Maße von der Mindestbetriebstemperatur auf den Temperaturschwellenwert ansteigt. In ähnlicher Weise kann das Bypass-Ventil die Menge des Abgasstroms, welche durch den Niedertemperatur-SCR-Katalysator fließt, schrittweise von 0% auf 100% des Abgasstroms erhöhen, wenn die Temperatur des Abgasstroms in entsprechendem Maße vom Temperaturschwellenwert auf die Mindestbetriebstemperatur sinkt.

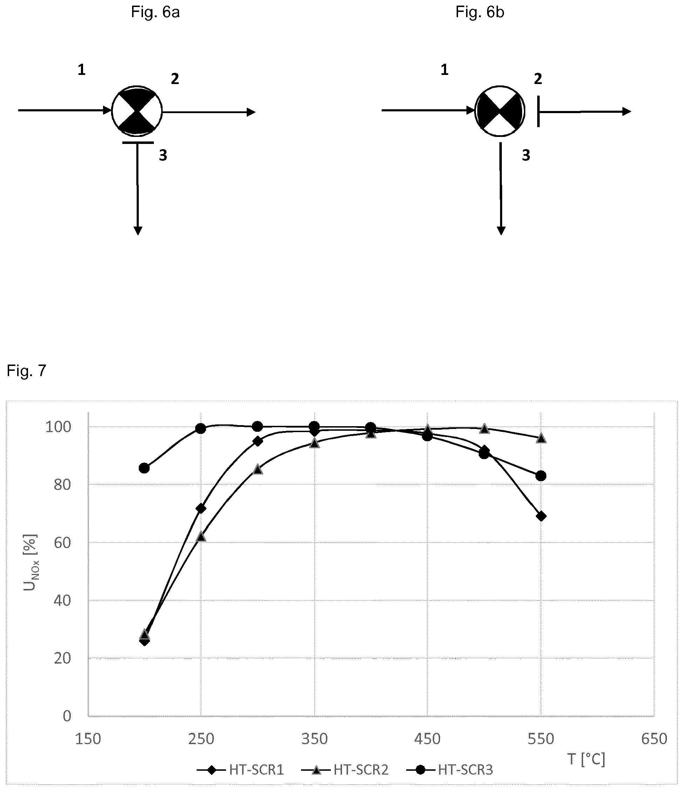

Optional kann das Abgas-Bypass- und/oder Durchflussregulierungsventil elektronisch mit einem Steuergerät verbunden sein, welches die Schaltung des Ventils auf selektive Weise steuert. Das Steuergerät ist nicht in den Figuren 1 bis 5 eingezeichnet. Das Abgasbypass- und/oder Durchflussregulierungsventil kann zwischen einer offenen Stellung und einer geschlossenen Stellung geschaltet werden. In der offenen Stellung, d.h. unterhalb der Mindestbetriebstemperatur des HT-SCR, leitet das Abgas-Bypass- und/oder Durchflussregulierungsventil sämtliches Abgas in den TT-SCR. In der geschlossenen Stellung, d.h. oberhalb der Mindestbetriebstemperatur des HT-SCR, hingegen leitet das Abgas-Bypass- und/oder Durchflussregulierungsventil keinerlei Teilmengen des Abgases in den TT-SCR. Anders ausgedrückt, führt das Abgas-Bypass- und/oder Durchflussregulierungsventil in der geschlossenen Stellung dazu, dass der TT-SCR umgangen wird. In bestimmten Umsetzungen kann das Abgas-Bypass- und/oder Durchflussregulierungsventil auf beliebige Stellungen zwischen der offenen und der geschlossenen Stellung eingestellt werden, um die Flussrate zum TT-SCR selektiv zu regulieren. Anders ausgedrückt, kann das Abgas-Bypass- und/oder Durchflussregulierungsventil derart gesteuert werden, dass beliebige Teilmengen an Abgas vom HT-SCR in den TT-SCR-Katalysator fließen. Der Gasweg, d.h. die Strömungsrichtung des Abgases, ist in den Fig. 6a und 6b schematisch verdeutlicht.

Die Mindestbetriebstemperatur ist dabei diejenige Temperatur, die mindestens erforderlich ist, um die Bereitstellung des Reduktionsmittels und die eigentliche katalytische Reaktion zu initiieren.

Vorteilhaft ist bei allen im Rahmen der vorliegenden Erfindung beschriebenen Ausführungsformen unmittelbar vor dem TT-SCR ein weiteres Reduktionsmittel-Zufuhrsystem angeordnet.

In einer vorteilhaften Ausführungsform enthält das Reduktionsmittel-Zufuhrsystem a) eine Reduktionsmittelquelle, b) eine Reduktionsmittelpumpe und c) eine Reduktionsmittelabgabevorrichtung oder eine Reduktionsmitteleinspritzvorrichtung.

In einer weiteren vorteilhaften Ausführungsform wird bei der Dosierung des flüssigen Reduktionsmittels auf eine Pumpe verzichtet. Stattdessen ist der Behälter oder Tank, welcher das Reduktionsmittel enthält, derart angebracht, dass die Förderung zur Reduktionsmittelabgabevorrichtung oder -einspritzvorrichtung durch die Schwerkraft erfolgt.

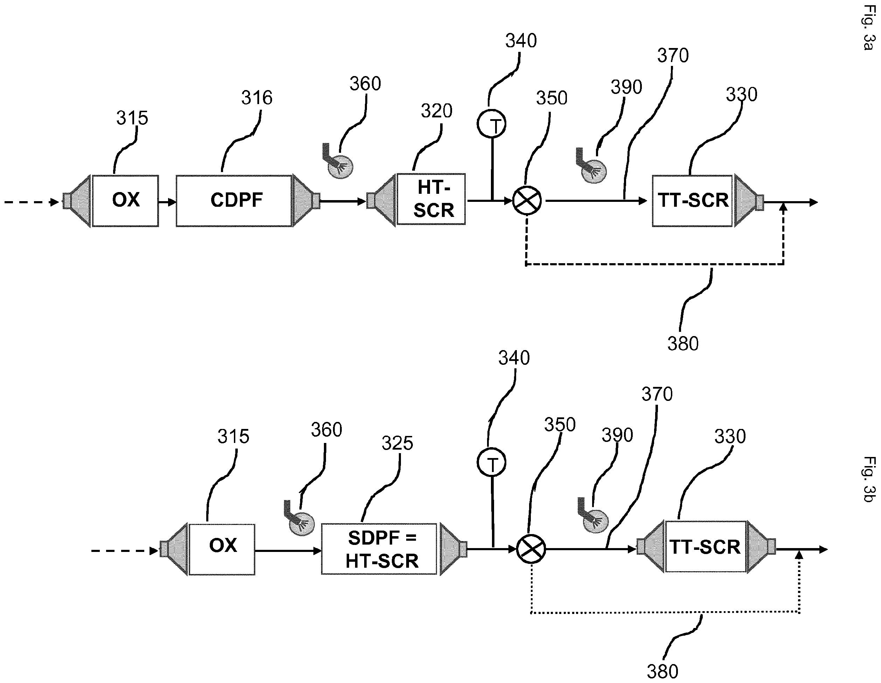

In allen Ausführungsformen der vorliegenden Erfindung befindet sich unmittelbar stromaufwärts vor dem HT-SCR ein Reduktionsmittel-Zufuhrsystem, siehe z.B. Fig. 1a und 1b. In den Fig. 3b, 4a und 5b hat der SDPF die Funktion eines HT-SCR.

Optional können noch weitere Reduktionsmittel-Zufuhrsysteme vorhanden sein. Vorteilhaft sind diese weiteren Reduktionsmittel-Zufuhrsysteme unmittelbar stromaufwärts vor dem TT-SCR angeordnet, wie dies in den Fig. 2a, 2b, 3a, 3b und 5 gezeigt ist.

In vorteilhaften Ausführungsformen befindet sich unmittelbar stromaufwärts vor dem Reduktionsmittel-Zufuhrsystem, welches unmittelbar stromaufwärts vor dem HT-SCR befindet, ein Oxidationskatalysator.

Oxidationskatalysatoren sind im Stand der Technik seit langem bekannt und in den verschiedensten Ausführungsformen beschrieben. Zumeist werden die Edelmetalle Platin und/oder Palladium als oxidationskatalytisch aktive Komponenten eingesetzt, siehe zum Beispiel US 2011/0206584 A1, aber auch zusätzlich Gold enthaltende Katalysatoren sind schon beschrieben, beispielsweise im Abgasnachbehandlungssystem gemäß der EP 1 938 893 A2. Oxidationskatalysatoren sind dem Fachmann bekannt und können im Rahmen der vorliegenden Erfindung verwendet werden, ohne den Schutzbereich der Patentanmeldung zu verlassen.

Als Trägersubstrate werden gemäß vorliegender Erfindung insbesondere die dem Fachmann bekannten inerten Trägersubstrate verwendet. Insbesondere handelt es sich dabei um Wabenkörper aus Metall oder bevorzugt aus Keramik, die als Durchflusswaberikörper oder auch als Wandflussfilterkörper ausgeführt sein können. Bevorzugt sind keramische Wabenkörper aus Cordierit.

In einer weiteren Ausführungsform befindet sich zwischen dem HT-SCR, vor dem sich ein Reduktionsmittel-Zufuhrsystem befindet, und dem Temperatursensor ein weiterer HT-SCR. Dabei können die verschieden HT-SCR-Einheiten eine Kombination verschiedener Technologien darstellen. So können beispielsweise Kombinationen aus Fe-Zeolith, z.B. Fe-BEA, und Cu-Zeolith, z.B. Cu-SSZ-13, sowie Kombinationen aus vanadiumbasierten Systemen und Cu-Zeolith einerseits als auch die Kombination verschiedener Cu-Zeolith-Technologien andererseits verwendet werden. Es kommen auch hier die schon genannten Durchflusssubstrate zur Verwendung. Des Weiteren kann es sich beim HT-SCR auch um einen SDPF handeln, d.h. um einen SCR, der auf einem DPF integriert ist. Alle hier genannten Kombinationen sind dem Fachmann bekannt und können verwendet werden, ohne den Schutzbereich der Patentansprüche zu verlassen.

In einer weiteren Ausführungsform befindet sich zwischen dem Oxidationskatalysator und dem Reduktionsmittel-Zufuhrsystem, das sich unmittelbar stromaufwärts vor dem HT-SCR befindet, ein katalytisch beschichteter Dieselpartikelfilter (CDPF).

Zur Entfernung von Partikelemissionen aus dem Abgas von Dieselfahrzeugen werden spezielle Partikelfilter eingesetzt, die zur Verbesserung ihrer Eigenschaften mit einer oxidationskatalytisch aktiven Beschichtung versehen sein können. Eine solche Beschichtung dient der Erniedrigung der Aktivierungsenergie für den sauerstoffbasierten Partikelabbrand (Rußverbrennung) und somit der Absenkung der Rußzündtemperatur auf dem Filter, der Verbesserung des passiven Regenerationsverhaltens durch Oxidation von im Abgas enthaltenen Stickstoffmonoxid zu Stickstoffdioxid und der Unterdrückung von Durchbrüchen von Kohlenwasserstoff- und Kohlenmonoxidemissionen. Geeignete Trägersubstrate für diese CDPFs sind beispielsweise Wandstromfilter aus Siliciumcarbid, Aluminiumtitanat und Cordierit. Derartige Partikelfilter sind beispielsweise in M Pfeifer, M Votsmeier, M Kögel, PC Spurk und ES Lox: "The Second Generation of Catalyzed Diesel Particulate Filters for Passenger Cars - Particulate Filters with Integrated Oxidation Catalyst Function", SAE Paper SAE 2005-01-1756, ausführlich beschrieben.

In einer weiteren Ausführungsform sind stromaufwärts zum Oxidationskatalysator ein oder mehrere HT-SCR angeordnet. Dabei befindet sich unmittelbar stromaufwärts zu demjenigen HT-SCR, der dem Verbrennungsmotor am nächsten ist, ein Reduktionsmittel-Zufuhrsystem.

In einer weiteren Ausführungsform sind stromaufwärts zum Oxidationskatalysator ein oder mehrere HT-SCR und ein ASC angeordnet. Dabei befindet sich unmittelbar stromaufwärts zu demjenigen HT-SCR, der dem Verbrennungsmotor am nächsten ist, ein Reduktionsmittel-Zufuhrsystem. In dieser Anordnung aus ASC und ein oder mehreren HT-SCR, die alle stromaufwärts zum Oxidationskatalysator angeordnet sind, befindet sich der ASC in der am meisten stromabwärts gelegenen Position. Vorteilhaft befindet sich der ASC dann unmittelbar stromaufwärts zum Oxidationskatalysator.

In einer weiteren Ausführungsform befindet sich der HT-SCR mit stromabwärts angeordneten TT-SCR unmittelbar motorausgangsseitig. Dabei befindet sich unmittelbar stromaufwärts zum HT-SCR ein Reduktionsmittel-Zufuhrsystem. Stromabwärts des HT-SCR befindet sich das zuvor beschriebene, Abgas-Bypass- und/oder Durchflussregulierungs-Ventil. In einer vorteilhaften Auslegungsform befindet sich stromaufwärts des Abgas-Bypass- und/oder Durchflussregulierungs-Ventil ein weiterer Temperatursensor. Auch in dieser motornahen Konfiguration kann unmittelbar stromaufwärts des TT-SCR ein weiteres Reduktionsmittel-Zufuhrsystem angeordnet sein. Der gezeigte Aufbau entspricht den Fig.1a und 1b. In einer besonders vorteilhaften Ausführungsform ist stromabwärts zum TT-SCR ein Ammoniak-Schlupfkatalysator angeordnet.

Um den Umsatz der Stickoxide im zweiten SCR-Katalysator zu verbessern kann es nötig sein, den Ammoniak in einer Menge zu dosieren, die etwa 10 bis 20% über der an sich benötigten, das heißt stöchiometrischen Menge liegt. Dadurch wird jedoch das Risiko einer höheren Sekundäremission insbesondere durch verstärkten Ammoniak-Schlupf erhöht. Da Ammoniak schon in geringer Konzentration stechend riecht und im Nutzfahrzeug-bereich gesetzlich limitiert ist, muss der Ammoniak-Schlupf minimiert werden. Zu diesem Zweck sind sogenannte Ammoniak-Sperrkatalysatoren bekannt, die zur Oxidation von durchbrechendem Ammoniak in Strömungsrichtung des Abgases hinter einem SCR-Katalysator angeordnet sind. Ammoniak-Sperrkatalysatoren in verschiedenen Ausführungsformen sind beispielsweise in US 5,120,695, WO 02/100520 A1 und EP 0 559 021 A2 beschrieben.

In einer weiteren Ausführungsform umfasst die erfindungsgemäße Katalysatoranordnung deshalb einen Ammoniak-Sperrkatalysator, der sich an den zweiten SCR-Katalysator anschließt.

Beispielsweise umfasst der Ammoniak-Sperrkatalysator SCR-aktives Material und ein oder mehrere Platingruppenmetalle, insbesondere Platin oder Platin und Palladium. Als SCR-katalytisch aktives Material kommen insbesondere alle oben beschriebenen SCR-Katalysatoren in Frage.

Die erfindungsgemäße Aufgabe, ein Verfahren zur Behandlung eines Abgasstroms bereitzustellen, welches das neue SCR-System umfasst, wird erfindungsgemäß gelöst durch

- Bereitstellen eines Abgasnachbehandlungssystems, das einen SCR-Katalysator für mittlere bis hohe Temperaturen (HT-SCR), einen stromabwärts zum SCR für niedrige bis mittlere Temperaturen angeordneten Niedertemperatur-SCR (TT-SCR), einen unmittelbar hinter dem HT-SCR angeordneten Temperatursensor und ein unmittelbar stromaufwärts des Niedertemperatur-SCR angeordnetes Abgas-Bypass- und/oder Durchflussregulierungsventil umfasst,

  - wobei der SCR-Katalysator für mittlere bis hohe Temperaturen sowohl dafür ausgelegt ist, wobei der mittlere Temperaturbereich Temperaturen von 250°C bis kleiner als 450°C und der hohe Temperaturbereich Temperaturen von 450°C bis 750° umfasst,

a) $NO_x$ in einem Abgas zu reduzieren, das eine Temperatur oberhalb eines Temperaturschwellenwertes hat, als auch

b) über den Temperaturbereich des Abgases, der unterhalb eines Temperaturschwellenwerts liegt, das im Abgas enthaltene $SO_x$ zu speichern,

- und der Niedertemperatur-SCR dafür ausgelegt ist, $NO_x$ in einem Abgas zu reduzieren, das eine Temperatur unterhalb eines Temperaturschwellenwertes hat, wobei der Niedertemperaturbereich Temperaturen von 60°C bis kleiner als 250°C umfasst,

- und wobei der Temperatursensor die Temperatur des Abgasstroms misst, der den HT-SCR verlässt,

- und wobei das Abgas-Bypass- und/oder Durchflussregulierungsventil dafür ausgelegt ist, den Abgasstrom in seiner Gesamtheit am Niedertemperatur-SCR vorbeizuleiten, wenn dieser Abgasstrom eine Temperatur größer oder gleich einem Temperaturschwellenwert hat,

- Speichern des im Abgas enthaltenen $SO_x$ im HT-SCR,

- Reduktion von $NO_x$ in einem Abgasstrom mit dem Niedertemperatur-SCR-Katalysator, wenn eine Temperatur des Abgasstroms innerhalb eines niedrigen Temperaturbereichs liegt;

- Vorbeileiten des Abgasstroms in seiner Gesamtheit am Niedertemperatur-SCR, wenn dieser eine Temperatur größer oder gleich einem Temperaturschwellenwert hat, und

- Reduktion von $NO_x$ in einem Abgasstrom mit dem SCR-Katalysator für normale bis hohe Temperaturen, wenn die Temperatur des Abgasstroms innerhalb eines normalen bis hohen Temperaturbereichs liegt.

**Beschreibung der Zeichnungen**

In den Zeichnungen stehen Pfeile immer für den Abgasstrom von stromaufwärts nach stromabwärts, d.h. von motornah nach auspuffnah.
Gestrichelte Pfeile, beispielsweise zwischen den beiden Komponenten Motor **110** und SCR **120** in Fig. 1a und Fig. 1b, bedeuten, dass sich zwischen diesen Komponenten optional weitere Komponenten befinden können.
Gepunktete Pfeile symbolisieren das Vorbeileiten des gesamten Abgasstroms am Niedertemperatur-SCR, wenn dieser Abgasstrom eine Temperatur oberhalb eines Temperaturschwellenwertes hat, siehe **180, 280, 380, 480** und **580** in den Fig. 1 bis 5.
Die in den Zeichnungen verwendeten Abkürzungen haben folgende Bedeutungen:

| | |
|---|---|
| HT-SCR | Katalysator für die selektive katalytische Reduktion (selective catalytic reduction, SCR); hier: SCR-Katalysator für mittlere bis hohe Temperaturen |
| TT-SCR | Niedertemperatur-SCR |
| OX | Oxidationskatalysator |
| DPF | Dieselpartikelfilter |
| SDPF | Dieselpartikelfilter (DPF), der mit einem SCR beschichtet ist |
| CDPF | katalytisch beschichteter Dieselpartikelfilter (catalytically coated diesel particulate filter) = DPF, der mit einem Oxidationskatalysator beschichtet ist |
| ASC | Ammoniak-Schlupfkatalysator (ammonia slip catalyst) |

Die katalytischen Systeme, also der HT-SCR, der TT-SCR, der OX, der DPF, der SDPF und der ASC können unabhängig voneinander jeweils aus einem oder beliebig vielen Bricks unterschiedlicher Dimension und Form zusammengesetzt sein.
**Fig. 1a** zeigt den Kern der vorliegenden Erfindung. Stromabwärts des Motors **110** befindet sich ein HT-SCR-Katalysator **120** für mittlere bis hohe Temperaturen. Unmittelbar stromaufwärts vor diesem SCR-Katalysator **120** befindet sich ein Reduktionsmittel-Zufuhrsystem **160,** das eine Reduktionsmittelquelle, -pumpe und -abgabevorrichtung oder -einspritzvorrichtung (nicht dargestellt) umfasst. Stromabwärts hinter dem SCR **120** ist ein Abgastemperatursensor **140** angeordnet. Hinter dem Abgastemperatursensor **140** befindet sich ein Abgas-Bypass- und/oder Durchflussregulierungsventil **150,** das derart mit dem SCR **120** in Verbindung steht, dass es Abgas empfängt. Das Abgas-Bypass- und/oder Durchflussregulierungsventil **150** leitet den Abgasstrom über den Bypass **180** am Niedertemperatur-SCR **130** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom, vollständig oder teilweise, durch den Niedertemperatur-SCR **130** geleitet, siehe Pfeil **170.**

In der Ausführungsform gemäß **Fig. 1b** gibt es zwischen Abgas-Bypass- und/oder Durchflussregulierungsventil **150** und Niedertemperatur-SCR **130** noch ein weiteres Reduktionsmittel-Zufuhrsystem **190.** Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

**Fig. 2** zeigt eine bevorzugte Ausführungsform eines Abgasreinigungssystems, die das die erfindungsgemäße Kombination aus einem SCR für normale bis hohe Temperaturen und einem Niedertemperatur-SCR. Dieses System umfasst einen Oxidationskatalysator **215.** Unmittelbar stromabwärts hinter diesem Oxidationskatalysator **215** befindet sich ein Reduktionsmittelzufuhrsystem **260,** das wie das entsprechende System **160** in Fig. 1a und Fig. 1b aufgebaut ist und dem SDPF **225** Reduktionsmittel zuführt. Unmittelbar stromabwärts hinter dem SDPF **225** befindet sich ein SCR **220.** Stromabwärts hinter dem SCR **220** ist ein Abgastemperatursensor **240** angeordnet. Hinter dem Abgastemperatursensor **240** befindet sich ein Abgas-Bypass- und/oder Durchflussregulierungsventil **250,** das derart mit dem SCR **220** in Verbindung steht, dass es Abgas empfängt. Das Abgas-Bypass- und/oder Durchflussregulierungsventil **250** leitet den Abgasstrom über den Bypass **280** am Niedertemperatur-SCR **230** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom, teilweise oder vollständig, durch den Niedertemperatur-SCR **230** geleitet, siehe Pfeil **270.** Optional kann zwischen Abgas-Bypass- und/oder Durchflussregulierungsventil **250** und Niedertemperatur-SCR **230** noch ein weiteres Reduktionsmittel-Zufuhrsystem **290** vorgesehen sein, wie dies in Fig. 1b beschrieben wurde. Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

**Fig. 3a** zeigt eine weitere vorteilhafte Ausführungsform eines Abgasreinigungssystem enthaltend die erfindungsgemäße Kombination aus einem SCR für normale bis hohe Temperaturen und einem Niedertemperatur-SCR. Dieses System umfasst einen Oxidationkatalysator **315** und einen unmittelbar stromabwärts dahinter befindlichen CDPF **316.** Stromabwärts hinter dem CDPF befindet sich ein befindet sich ein Reduktionsmittelzufuhrsystem **360,** das wie das entsprechende System **160** in Fig. 1a und Fig. 1b aufgebaut ist und dem SCR **225** Reduktionsmittel zuführt. Stromabwärts hinter dem SCR **320** ist ein Abgastemperatursensor **340** angeordnet. Hinter dem Abgastemperatursensor **340** befindet sich ein Abgas-Bypass- und/oder Durchflussregulierungsventil **350,** das derart mit dem SCR **320** in Verbindung steht, dass es Abgas empfängt. Das Abgas-Bypass- und/oder Durchflussregulierungsventil **350** leitet den Abgasstrom über den Bypass **380** am Niedertemperatur-SCR **330** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom durch den Niedertemperatur-SCR **330** geleitet, siehe Pfeil **370.** Optional kann zwischen Abgas-Bypass- und/oder Durchflussregulierungsventil **350** und Niedertemperatur-SCR **330** noch ein weiteres Reduktionsmittel-Zufuhrsystem **390** vorgesehen sein, wie dies in Fig. 1b beschrieben wurde. Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

In **Fig. 3b** ist eine weitere vorteilhafte Ausführungsform der vorliegenden Erfindung gezeigt. Das System umfasst einen Oxidationskatalysator **315,** gefolgt von einem Reduktionsmittelzufuhrsystem **360,** das wie das entsprechende System **160** in Fig. 1a und Fig. 1b aufgebaut ist und dem SDPF **325** Reduktionsmittel zuführt. Stromabwärts hinter dem SDPF **325** ist ein Abgastemperatursensor **340** angeordnet. Hinter dem Abgastemperatursensor **340** befindet sich ein Abgas-Bypass- und/oder Durchflussregulierungsventil **350,** das derart mit dem SDPF **325** in Verbindung steht, dass es Abgas empfängt. Das Abgas-Bypass- und/oder Durchflussregulierungsventil **350** leitet den Abgasstrom über den Bypass **380** am Niedertemperatur-SCR **330** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom durch den Niedertemperatur-SCR **330** geleitet, siehe Pfeil **370.** Optional kann zwischen Abgas-Bypass- und/oder Durchflussregulierungsventil **350** und Niedertemperatur-SCR **330** noch ein weiteres Reduktionsmittel-Zufuhrsystem **390** vorgesehen sein, wie dies in Fig. 1b beschrieben wurde. Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

**Fig. 4a** betrifft eine weitere Ausführungsform, die auf dem in Fig. 3a beschriebenen System beruht. Stromaufwärts des Oxidationskatalysators **415** und einen unmittelbar stromabwärts dahinter befindlichen CDPF **416** befindet sich ein Reduktionsmittelzufuhrsystem **465,** das wie das entsprechende System **160** in Fig. 1a und Fig. 1b aufgebaut ist und dem SCR **425** Reduktionsmittel zuführt. Hinter Oxidationskatalysator **415** und CDPF **416** ist, wie in Fig. 3a beschrieben, ein weiteres Reduktionsmittelzufuhrsystem **460** angeordnet, das wie das entsprechende System **160** in Fig. 1a und Fig. 1b aufgebaut ist und dem SCR **420** Reduktionsmittel zuführt. Stromabwärts hinter dem SCR **420** ist ein Abgastemperatursensor**440** angeordnet. Hinter dem Abgastemperatursensor **440** befindet sich ein Abgas-Bypass- und/oder Durchflussregulierungsventil **450,** das derart mit dem SCR **420** in Verbindung steht, dass es Abgas empfängt. Das Abgas-Bypass- und/oder Durchflussregulierungsventil **450** leitet den Abgasstrom über den Bypass **480** am Niedertemperatur-SCR **430** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom durch den Niedertemperatur-SCR **430** geleitet, siehe Pfeil **470.** Optional kann zwischen Abgas-Bypass- und/oder Durchflussregulierungsventil **450** und Niedertemperatur-SCR **430** noch ein weiteres Reduktionsmittel-Zufuhrsystem **490** vorgesehen sein, wie dies in Fig. 1b beschrieben wurde. Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

**Fig. 4b** betrifft eine weitere Ausführungsform, die auf dem in Fig. 4a beschriebenen System beruht. Auch hier befindet sich, wie in Fig. 4a, stromaufwärts des Oxidationskatalysators **415** ein Reduktionsmittelzufuhrsystem **465,** das wie das entsprechende System **160** in Fig. 1a und Fig. 1b aufgebaut ist und den beiden hintereinander befindlichen SCR **425** Reduktionsmittel zuführt. Hinter dem Oxidationskatalysator 415 ist ein Reduktionsmittelzufuhrsystem **465,** das wie das entsprechende System **160** in Fig. 1a und Fig. 1b aufgebaut ist und dem SDPF **420** Reduktionsmittel zuführt. Stromabwärts hinter dem SDPF **420** ist ein Abgastemperatursensor **440** angeordnet. Hinter dem Abgastemperatursensor **440** befindet sich ein Abgas-Bypass- und/oder Durchflussregulierungsventil **450,** das derart mit dem SDPF **420** in Verbindung steht, dass es Abgas empfängt. Das Abgas-Bypass- und/oder Durchflussregulierungsventil **450** leitet den Abgasstrom über den Bypass **480** am Niedertemperatur-SCR **430** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom durch den Niedertemperatur-SCR **430** geleitet, siehe Pfeil **470.** Optional kann zwischen Abgas-Bypass- und/oder Durchflussregulierungsventil **450** und Niedertemperatur-SCR **430** noch ein weiteres Reduktionsmittel-Zufuhrsystem **390** vorgesehen sein, wie dies in Fig. 1b beschrieben wurde. Für den Fall, dass die Temperatur des Abgasstroms unter dem Temperaturschwellenwert liegt, wird der Abgasstrom durch den Niedertemperatur-SCR geleitet, und unmittelbar vor dieser Einleitung wird dem Niedertemperatur-SCR Reduktionsmittel zugeführt.

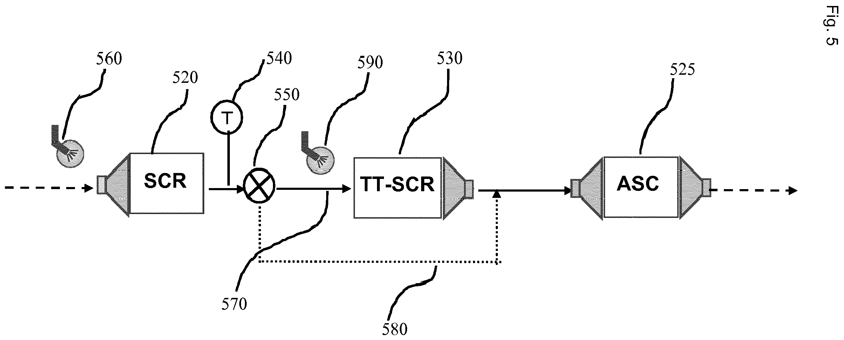

**Fig. 5** zeigt schematisch eine weitere vorteilhafte Ausführungsform der vorliegenden Erfindung, die exemplarisch als Ergänzung von Fig. 1a dargestellt ist. Stromabwärts des Motors, der in Fig. 5 nicht gezeigt ist, befindet sich ein SCR-Katalysator **520** für normale bis hohe Temperaturen. Unmittelbar stromaufwärts vor diesem SCR-Katalysator **520** befindet sich ein Reduktionsmittel-Zufuhrsystem **560,** das eine Reduktionsmittelquelle, - pumpe und -abgabevorrichtung oder -einspritzvorrichtung (nicht dargestellt) umfasst. Stromabwärts hinter dem SCR **520** ist ein Abgastemperatursensor **540** angeordnet. Hinter dem Abgastemperatursensor **540** befindet sich ein Abgas-Bypass- und/oder Durchflussregulierungsventil **550,** das derart mit dem SCR **520** in Verbindung steht, dass es Abgas empfängt. Das Abgas-Bypass- und/oder Durchflussregulierungsventil **550** leitet den Abgasstrom über den Bypass **580** am Niedertemperatur-SCR **530** vorbei, falls der Abgasstrom eine Temperatur größer oder gleich einem Temperaturschwellenwert hat. Liegt die Temperatur des Abgasstroms jedoch unter diesem Temperaturschwellenwert, so wird der Abgasstrom durch den Niedertemperatur-SCR **530** geleitet, siehe Pfeil **570.** Stromabwärts des Niedertemperatur-SCR 520 befindet sich in dieser Ausführungsform ein ASC **525.**

**Fig. 6a** zeigt ein Abgasbypass- oder Durchflussventil, nachfolgend als "Bypass-Ventil" bezeichent, das zu 100 % offen ist. "Zu 100 % offen" bedeutet dabei, dass die Abgaswege **1** und **2** verbunden sind, so dass Abgas vom HT-SCR in den TT-SCR fließt. Der Pfeil **1** zeigt dabei den Gasaustritt aus dem HT-SCR und den Eintritt in das Bypass-Ventil. Pfeil **2** zeigt den Austritt des Abgases aus dem Bypass-Ventil in Richtung des TT-SCR. Pfeil **3** zeigt den Austritt des Abgases aus dem Bypass-Ventil in Richtung Bypass. In Fig. **6a** ist der Austritt **3** vollständig geschlossen.

Die Ventilstellung gemäß Fig. **6a** entspricht, wie oben ausgeführt, einem zu 100% offenen Bypassventil. Hierbei gilt:

$$T_{ist} \quad \leq T_{min} \quad < T_{Thd}$$

$$T_{ist} \quad \geq T_{min} \quad < T_{Thd}$$

Dabei ist

$$T_{ist} \quad = \quad \text{Ist-Temperatur des HT-SCR}$$

$$T_{min} \quad = \quad \text{Mindestbetriebstemperatur des HT-SCR}$$

$$T_{Thd} \quad = \quad \text{Temperaturschwellenwert (temperature threshold)}$$

So lange die Ist-Temperatur, d.h. die tatsächliche Temperatur des HT-SCR, unter dem Temperaturschwellenwert liegt, wird das Abgas nach Verlassen des HT-SCR durch den TT-SCR geleitet, und zwar unabhängig davon, ob die Mindestbetriebstemperatur des HT-SCR bereits erreicht wurde oder nicht.

Fig. **6b** zeigt ein Bypassventil, das zu 100 % geschlossen ist. "Zu 100 % geschlossen" ist gleichbedeutend mit "zu 0 % offen". Hierbei sind die Abgaswege **1** und **3** verbunden, so dass Abgas, das aus dem HT-SCR kommt, in den Bypass strömt und nicht durch den TT-SCR. Hierbei gilt:

$$T_{ist} \quad > T_{min} \quad \geq T_{Thd}$$

So bald die Ist-Temperatur des HT-SCR größer ist als seine Mindestbetriebstemperatur und größer oder gleich dem Temperaturschwellenwert, wird das Bypassventil geschlossen. Der Abgasstrom wird dann nach Verlassen des HT-SCR am TT-SCR vorbeigeführt.

Wird ausschließlich ein Durchflussventil oder eine Kombination aus Abgas-Bypass- und Durchflussventil verwendet, so können Zustände zwischen 0 % und 100 % Öffnung des Durchflussventils durch den Zustand

$$T_{ist} \quad > T_{min} \quad < T_{Thd}$$

beschrieben werden. In diesem Zustand ist die Ist-Temperatur des HT-SCR größer als seine Mindestbetriebstemperatur, aber niedriger als der Temperaturschwellenwert. Hierbei kann aus ($T_{Thd}$ - $T_{ist}$) ein Proportionalitätsfaktor festgelegt werden, der den Öffnungsgrad des Durchflussventils angibt. Dabei gilt die Randbedingung:

Wenn

$$T_{ist} \quad \geq T_{min} \quad \text{und} \quad T_{Thd} - T_{ist} \leq 0,$$

dann ist das Bypassventil zu 0 % offen, was gleichbedeutend mit 100 % geschlossen ist.

Fig. 7 zeigt die Stickoxid-Umsatz-Werte $U_{NOx}$ [%] von drei HT-SCR-Katalysatoren im Temperaturbereich zwischen 200 und 550 °C. HT-SCR1 ist ein vanadiumhaltiger SCR, HT-SCR2 ein eisenhaltiger SCR, undHT-SCR3 ist ein kupferhaltiger SCR. Die Versuchsbedingungen für die Messung der Stickoxid-Umsatz-Werte sind in Ausführungsbeispiel 4 angegeben.

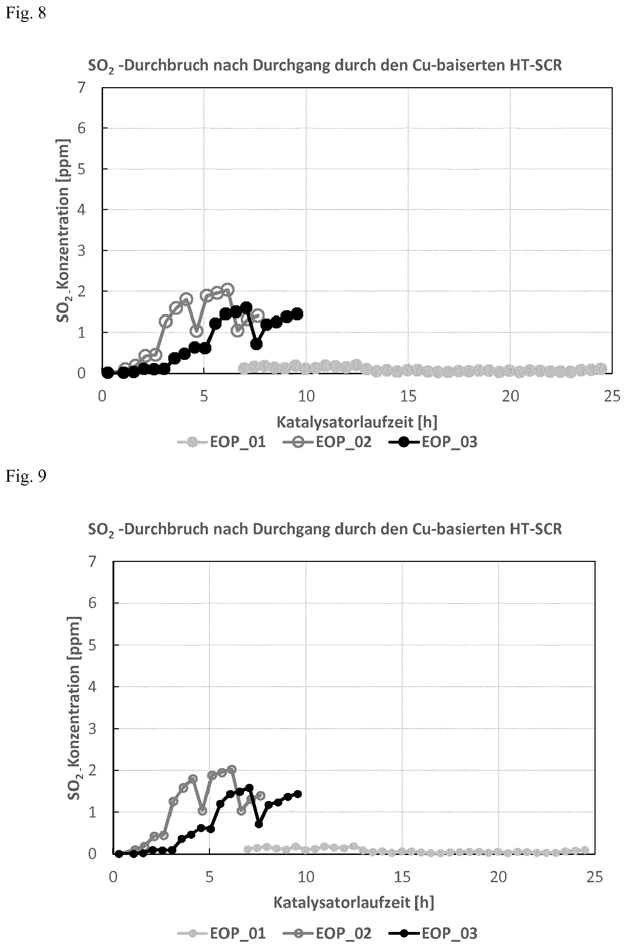

Fig. **8** zeigt den $SO_2$-Verlauf nach Durchströmen des DPF für drei stationäre Verschwefelungsexperimente an einem Motorprüfstand für einen Cu-Zeolith-HT-SCR. Diese Verschwefelungsexperimente sind in Ausführungsbeispiel 5 beschrieben. Dabei wurde für die drei Versuche die SCR Eintrittstemperatur und Raumgeschwindigkeit im SCR variiert. **Fig. 9** zeigt den $SO_2$-Verlauf nach Durchströmen des Cu-Zeolith-HT-SCR für drei stationäre Verschwefelungsexperimente an einem Motorprüfstand. Diese Verschwefelungsexperimente sind in Ausführungsbeispiel 5 beschrieben. Dabei wurde für die drei Versuche die SCR Eintrittstemperatur und Raumgeschwindigkeit im SCR variiert. Zusammen mit Fig. 8. Zeigt sich hieraus die Fähigkeit des Cu-Zeolithen als als $SO_x$-Speicher bei verschiedenen Temperaturen und Raumgeschwindigkeiten.

Bei Temperaturen unter der HT-SCR-Mindesttemperatur und damit auch unterhalb dem Schwellwert (EOP_01) ist über die Versuchsdauer kein $SO_2$-Durchbruch zu beobachten, was einen guten Schutz für den TT-SCR bedeutet.

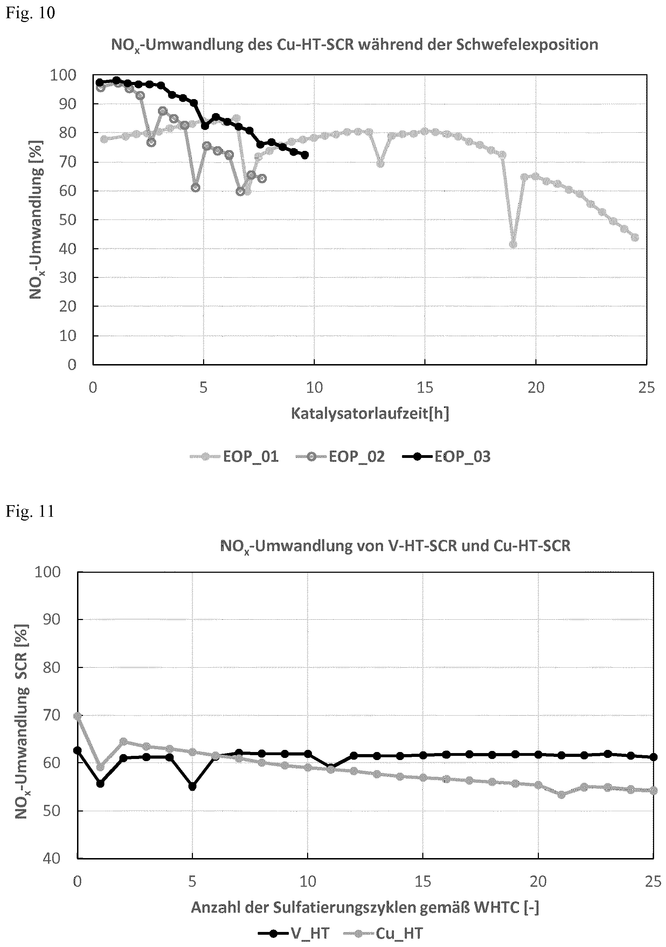

Durch Erhöhung der Temperatur und/oder der Raumgeschwindigkeit nimmt die $SO_x$-Falleneffizienz etwas ab. Da hier aber die $NO_x$-Konversion ~ 100% betragen kann, siehe Fig. 7 und 10, kann der TT-SCR in diesen Fällen schon in den Bypass geschaltet werden.

**Fig. 10** zeigt den $NO_x$-Umsatz des Cu-Zeolithen für die drei Verschwefelungsexperimente. Wie auch aus Fig. 7 abzuleiten ist, zeigt der HT-SCR bei 190°C keinen Vollumsatz, da diese Temperatur unter seiner Mindesttemperatur liegt. Dennoch wird die Konversion von 80% über lange Zeit, trotz Schwefelexposition, aufrechterhalten. Ebenfalls aus Fig. 7 ableitbar zeigt sich, dass sich zu Beginn der Verschwefelung bei den EOP_02 und EOP_03 ~ 100% NO$_x$-Konversion einstellen.

**Fig. 11** zeigt die Schwefeldurchbruchskurve aus dynamischen Motorprüfstandsversuchen für einen V-HT-SCR und einen Cu-HT-SCR. Der V-HT-SCR zeigt über die Versuchszeit kaum Schwefelspeicherfunktionalität. Der Cu-HT-SCR zeigt jedoch auch unter dynamischen Bedingungen die Eigenschaft als Schwefelfalle.

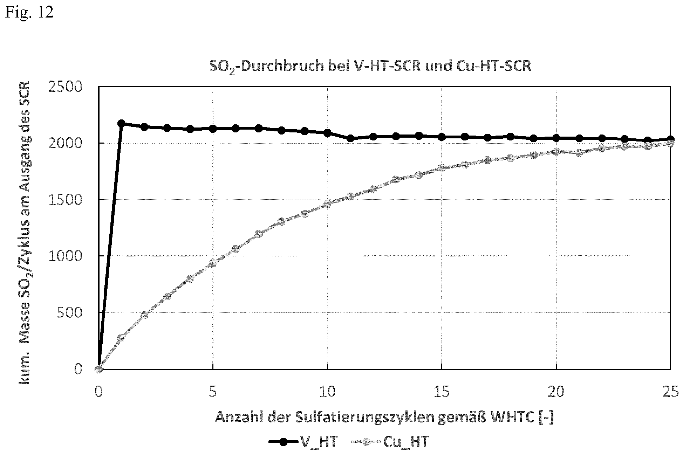

**Fig. 12** zeigt die NO$_x$-Umsatzkurven aus den dynamischen Motorprüfstandsversuchen für einen V-HT-SCR und einen Cu-HT-SCR. Beide Systeme zeigen, dass sie auch bei Schwefelexposition immer noch ihre HT-SCR-Funktion beibehalten.

## Ausführungsbeispiele

### Ausführungsbeispiel 1: HT-SCR1 = V-SCR

a) Ein kommerziell erhältliches, mit 5 Gew.-% Siliziumdioxid dotiertes Titandioxid in der Anatasform wurde in Wasser dispergiert und anschließend so viel Vanadiumdioxid (VO$_2$) und Wolframtrioxid (WO$_3$) zugefügt, dass ein Katalysator der Zusammensetzung 88,10 Gew.-% TiO$_2$, 4,60 Gew.-% SiO$_2$, 3,00 Gew.-% V$_2$O$_5$, 4,30 Gew.-% WO$_3$ resultiert. Die Mischung wurde intensiv gerührt und schließlich in einer handelsüblichen Rührwerkskugelmühle gerührt.

b) Die nach a) erhaltene Dispersion wurde auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 160 g/L beschichtet. Anschließend wurde bei 90°C getrocknet und bei 600°C für 2 Stunden kalziniert. Der so erhaltene Katalysator wird nachfolgend als HT-SCR1 bezeichnet.

### Ausführungsbeispiel 2: HT-SCR2 = Fe-SCR

a) Ein handelsüblicher Zeolith des Strukturtyps BEA mit einem SAR von 25 wird in Wasser mit einer Menge an Fe(NO$_3$)$_3$ gemischt, die einem Eisengehalt von 4,5 Gew.-% (bezogen auf den Eisen enthaltenden Zeolithen und berechnet als Fe$_2$O$_3$) entspricht, und über Nacht gerührt.

b) Die nach a) erhaltene Dispersion wurde auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 220 g/L beschichtet. Der erhaltene Katalysator (nachstehend als HT-SCR2 bezeichnet) wird bei 90°C getrocknet, danach schrittweise bei 350°C und bei 550°C in Luft kalziniert.

### Ausführungsbeispiel 3: HT-SCR3 = Cu-SCR

a) Ein handelsüblicher Zeolith des Strukturtyps CHA mit einem SAR von 30 wird in Wasser mit einer Menge an CUSO$_4$ gemischt, die einem Kupfergehalt von 3,7 Gew.-% (bezogen auf den Kupfer enthaltenden Zeolithen und berechnet als CuO) entspricht, und über Nacht gerührt.

b) Die nach a) erhaltene Dispersion wurde auf ein handelsübliches keramisches Durchflusssubstrat mit einem Volumen von 0,5 L und einer Zellzahl von 62 Zellen pro Quadratzentimeter bei einer Wandstärke von 0,17 mm auf dessen gesamter Länge mit einer Washcoat-Beladung von 220 g/L beschichtet. Der erhaltene Katalysator (nachstehend als HT-SCR3 bezeichnet) wird bei 90°C getrocknet, danach schrittweise bei 350°C und bei 550°C in Luft kalziniert.

### Ausführungsbeispiel 4: Bestimmung der DeNOx Aktivität:

Die DeNOx-Aktivität der Katalysatoren HT-SCR1 bis HT-SCR3 wurde in einer Labormodellgasanlage unter den in nachstehender Tabelle angegebenen Bedingungen getestet.

| Gas / Parameter | Konzentration / Bedingungen |
|---|---|
| $NH_3$ | 1100 ppm |
| NO | 1000 ppm |
| $H_2O$ | 5% |
| $O_2$ | 10% |
| N2 | Rest |
| Temperatur | Abkühlung stufenweise 550 bis 200 °C |
| Raumgeschwindigkeit | 60,000 $h^{-1}$ |

Während der Messung wurden die Stickoxid-Konzentrationen des Modellgases nach Durchströmen des HT-SCR-Katalysators mittels FT-IR (Fourier-Transform-Infrarotspektrometrie) erfasst. Aus den bekannten, dosierten Stickoxid-Gehalten, die während der Konditionierung zu Beginn des jeweiligen Prüflaufs mit einer Vor-Katalysator-Abgasanalytik verifiziert wurden, und den gemessenen Stickoxid-Gehalten nach Katalysator wurde der Stickoxid-Umsatz, bezogen auf das Verhältnis von $NH_3$ zu NO, über dem Katalysator für jeden Temperaturmesspunkt wie folgt berechnet:

$$U_{NO_x}[\%] = \left(1 - \frac{c_{Ausgang}(NO_x)}{c_{Eingang}(NO_x)}\right) \times 100$$

mit

$U_{NOx}$      Stickoxid-Umsatz
$C_{Ausgang}$      Konzentration der Stickoxide nach Durchströmen des HT-SCR-Katalysators
$C_{Eingang}$      Konzentration der Stickoxide vor Durchströmen des HT-SCR-Katalysators

$$c_{Eingang/Ausgang}(NO_x) = c_{Eingang/Ausgang}(NO) + c_{Eingang/Ausgang}(NO_2) + c_{Eingang/Ausgang}(N_2O)$$

Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen. Dies ist in Fig. 7 gezeigt.

Tab. 1: Stickoxid-Umsatz-Werte der drei HT-SCR-Katalysatoren gemäß Ausführungsbeispielen 1 bis 3

| T[°C] | $U_{NOx}$ [%] | | |
|---|---|---|---|
| | HT-SCR1 | HT-SCR2 | HT-SCR3 |
| 200 | 26,13 | 28,36 | 85,71 |
| 250 | 71,79 | 62,29 | 99,41 |
| 300 | 95,17 | 85,48 | 100,07 |
| 350 | 98,58 | 94,55 | 100,07 |
| 400 | 98,87 | 97,98 | 99,76 |
| 450 | 97,76 | 99,29 | 96,79 |
| 500 | 92,03 | 99,44 | 90,65 |
| 550 | 69,13 | 96,20 | 83,03 |

**Ausführungsbeispiel 5: Nachweis Cu-SCR: $SO_x$-Fallenfunktion und HT-SCR:**

Die Untersuchungen des HT-SCR3 hinsichtlich seiner Eignung als SCR-Katalysator für den mittleren bis hohen Temperaturbereich und gleichzeitig seiner Eignung als $SO_x$-Falle im Arbeitsbereich des TT-SCR wurde am Motorprüfstand durchgeführt. Das eingesetzte Katalysatorvolumen entsprach dem Faktor ~ 2,26 des Motorhubvolumens bzw. Hubraums. Als Analytik kam handelsübliche Analytik zum Einsatz. Für die $NO_x$-Umsatzbestimmung wurden vor und nach SCR die $NO_x$-Konzentrationen mittels CLDs (Chemolumineszenzdetektoren) gemessen. Der Umsatz wurde analog zu Beispiel 4 berechnet.

$$U_{NO_x}[\%] = \left(1 - \frac{c_{Ausgang}(NO_x)}{c_{Eingang}(NO_x)}\right) \times 100$$

mit

| | |
|---|---|
| $U_{NOx}$ | Stickoxid-Umsatz |
| $C_{Ausgang}$ | Konzentration der Stickoxide nach Durchströmen des HT-SCR-Katalysators |
| $C_{Eingang}$ | Konzentration der Stickoxide vor Durchströmen des HT-SCR-Katalysators |

Die $SO_x$-Eingangs- und Ausgangskonzentration wurde als $SO_2$ durch je ein Massenspektrometer am DPF-Ausgang und SCR-Ausgang gemessen. Die Versuche wurden in stationärer Betriebsweise durchgeführt. Es wurden hierzu drei verschiedene Betriebspunkte ausgewählt, die sich hinsichtlich ihrer SCR-Eintrittstemperatur und dem Abgasmassenstrom bzw. der SCR-Raumgeschwindigkeit (GHSV bzw. SV) unterscheiden.
Dabei steht GHS für "gas hourly space velocity" und SV für "space velocity".
Als Reduktionsmittel kam handelsübliche Harnstofflösung zum Einsatz. Es wurde eine Menge dosiert, die einem Ammoniak/NOX-Verhältnis von 1.2 entspricht.
Tabelle 2 stellt die Punkte zusammen. Hierbei steht EOP für Motorbetriebspunkt (engl. Engine operation point).

Tab. 2: SCR-Eintrittstemperatur und SCR-Raumgeschwindigkeit für drei betrachte EOPs

| | T SCR in [°C] | SV [h⁻¹] |
|---|---|---|
| EOP_01 | 190 | 7700 |
| EOP_02 | 260 | 23100 |
| EOP_03 | 260 | 34000 |

Dabei stellt EOP_01 einen Betriebspunkt dar, bei dem die Abgastemperatur unter dem Schwellwert und gleichzeitig unter der Mindesttemperatur des HT-SCR liegt.
EOP_02 und EOP_03 liegen bzgl. ihrer Temperatur über der Mindesttemperatur.
Für die Verschwefelung wurde B10-Dieselkraftstoff verwendet, der zusätzlich mit Schwefel versetzt war. Kraftstoffe dieser Art sind käuflich erwerblich. Für alle drei Betriebspunkte wurde der Versuch so lange durchgeführt bis ~ 2g Schwefel (nicht SOx sondern S) pro Liter SCR-Volumen emittiert wurden.
Der SO2-Verlauf nach Durchgang durch den DPF ist in Fig. 8 gezeigt und der SO2-Verlauf nach Durchgang durch den SCR in Fig. 9.

**Ausführungsbeispiel 6: NOx-Umwandlung und SO2-Fallenfunktion von Cu-HT-SCR und V-HT-SCR**

Der Vergleich eines V-SCR gegenüber einem Cu-SCR hinsichtlich seiner Eignung als kombinierter HT-SCR für den mittleren bis hohen Temperaturbereich und als $SO_x$-Falle im Arbeitsbereich des TT-SCR wurde am Motorprüfstand durchgeführt. Getestet wurden der vanadiumhaltige V-SCR (HT-SCR1) und der kupferhaltige Cu-SCR (HT-SCR3) gemäß den Ausführungsbeispielen 1 und 3. Das eingesetzte Katalysatorvolumen entsprach dem Faktor ~ 1,1 des Motorhubvolumens bzw. Hubraums. Für die $NO_x$-Umsatzbestimmung wurden vor und nach SCR die $NO_x$-Konzentrationen mittels CLDs (Chemolumineszenzdetektoren) gemessen. Der Umsatz wurde wie in Beispiel 5 berechnet.
Die $SO_x$-Eingangs- und Ausgangskonzentration wurde als $SO_2$ durch je ein Massenspektrometer am DPF-Ausgang und SCR-Ausgang gemessen. Die Versuche wurden in dynamischer Betriebsweise durchgeführt. Hierzu wurde eine Abfolge von WHTC-Zyklen durchgeführt (World Harmonized Transient Cycles). WHTC sind gesetzlich vorgegeben Testzyklen, die zur Prüfung, Qualifikation und Freigabe von Schwerlast-/Nutzlastmotoren verwendet werden. Durch- und Ausführung eines WHTC sowie die Implementierung der Testprozedur sind dem Fachmann bekannt.
Als Reduktionsmittel kam handelsübliche Harnstofflösung zum Einsatz. Es wurde eine Menge dosiert, die einem Ammoniak/$NO_x$-Verhältnis von 0,8 entspricht. Dies ist unterstöchiometrisch, und daher kann der HT-SCR 100% Umsatz nicht erreichen. Die theoretische Maximalkonversion entspräche demnach 80%.

Für die Verschwefelung wurde B10-Dieselkraftstoff verwendet, der zusätzlich mit Schwefel versetzt war. Kraftstoffe dieser Art sind käuflich erwerblich. Die Schwefelemission pro WHTC betrug ∼ 1375 mg.

Der $NO_x$-Umsatz des Cu-HT-SCR ist in Fig. 10 gezeigt.

Die Schwefeldurchbruchskurve aus den dynamischen Motorprüfstandsversuchen für einen V-HT-SCR und dem Cu-HT-SCR ist in Fig. 11 gezeigt.

Fig. 12 zeigt die $NO_x$-Umsatzkurven aus den dynamischen Motorprüfstandsversuchen für einen V-HT-SCR und einen Cu-HT-SCR. Dabei ist die kumulierte Masse an $SO_2$ pro Zyklus, gemessen am Ausgang des SCR, gegen die Anzahl der Sulfatierungszyklen aufgetragen.

**Patentansprüche**

1. Abgasnachbehandlungssystem, das derart an einen Verbrennungsmotor gekoppelt werden kann, dass es den Abgasstrom empfängt, umfassend

   - einen Katalysator für die selektive katalytische Reduktion für mittlere bis hohe Temperaturbereiche (HT-SCR), wobei der mittlere Temperaturbereich Temperaturen von 250°C bis kleiner als 450°C und der hohe Temperaturbereich Temperaturen von 450°C bis 750° umfasst, der sowohl dafür ausgelegt ist,

      - $NO_x$ in einem Abgas zu reduzieren, das eine Temperatur oberhalb eines Temperaturschwellenwertes hat, als auch
      - über den Temperaturbereich des Abgases, der unterhalb eines Temperaturschwellenwerts liegt, das im Abgas enthaltene $SO_x$ zu speichern,

   - ein stromaufwärts unmittelbar vor dem HT-SCR angeordnetes Reduktionsmittel-Zufuhrsystem,
   - einen stromabwärts zum HT-SCR angeordneten Niedertemperatur-SCR (TT-SCR), wobei der Niedertemperaturbereich Temperaturen von 60°C bis kleiner als 250°C umfasst und wobei der TT-SCR dafür ausgelegt ist, $NO_x$ in einem Abgas zu reduzieren, das eine Temperatur unterhalb eines Temperaturschwellenwertes hat,
   - einen Temperatursensor, der unmittelbar hinter dem HT-SCR angeordnet ist und die Temperatur des Abgasstroms misst, der diesen HT-SCR verlässt,
   - ein Abgas-Bypass- und/oder Durchflussregulierungsventil, welches dafür ausgelegt ist, den Abgasstrom in seiner Gesamtheit am TT-SCR vorbeizuleiten, wenn dieser Abgasstrom eine Temperatur größer oder gleich einem Temperaturschwellenwert hat, wobei das Abgas-Bypass- und/oder Durchflussregulierungsventil unmittelbar stromaufwärts des TT-SCR-angeordnet ist.

2. Abgasnachbehandlungssystem nach Anspruch 1, worin der HT-SCR in Form einer katalytisch aktiven Schicht auf einem Trägersubstrat vorliegt, wobei es sich bei der katalytisch aktiven Schicht um ein Molsieb handelt, ausgewählt aus

   - einem Aluminosilikat mit einem SAR von 5-50 und einem Siliciumaluminium-phosphat (SAPO) mit einem (Al+P)/Si-Wert von 4-15 ausgewählt ist,
   - wobei das Molsieb 1-10 Gew.-% eines Übergangsmetalls enthält, ausgewählt aus Fe, Cu und Gemischen davon, berechnet als $Fe_2O_3$ bzw. CuO bezogen auf das Gesamtgewicht des Molsiebs,
   - und worin das Molsieb Alkali- und Erdalkalimetall-Kationen ausgewählt aus Li, Na, K, Rb, Cs, Mg, Ca, Sr, Ba und Gemischen davon in einer Gesamtmenge von ≤ 1 Gew.-% enthält, berechnet in Form der reinen Metalle und bezogen auf das Gesamtgewicht des Molsiebs,
   - und worin das Molsieb die Metalle Co, Mn, Cr, Zr und Ni in einer Gesamtmenge von ≤ 1 Gew.-%, berechnet in Form der reinen Metalle und bezogen auf das Gesamtgewicht des Molsiebs, enthält.

3. Abgasnachbehandlungssystem nach Anspruch 2, **dadurch gekennzeichnet, dass** das Molsieb ausgewählt ist aus kleinporigen Zeolithen mit einer maximalen Porengröße von acht tetraedrischen Atomen und beta-Zeolith.

4. Abgasnachbehandlungssystem nach einem der Ansprüche 2 oder 3, **dadurch gekennzeichnet, dass** das Molsieb ein Fe-BEA ist mit einem SAR von 10 bis 35, einem Alkalimetallgehalt von 0-0,7 Gew.-%, berechnet als reine Metalle, und einem Fe-Gehalt von 3-9 Gew.-%, berechnet als $Fe_2O_3$, wobei der Alkalimetall- und Fe-Gehalt jeweils auf das Gesamtgewicht des Zeolithen bezogen sind.

5. Abgasnachbehandlungssystem nach einem der Ansprüche 2 oder 3, **dadurch gekennzeichnet, dass** das Molsieb ein Cu-CHA ist mit einem SAR von 10 bis 35, einem Alkalimetallgehalt von 0-0,7 Gew.-%, berechnet als reine Metalle, und einem Cu-Gehalt von 1-7 %, berechnet als CuO, wobei der Alkalimetall- und Cu-Gehalt jeweils auf das Gesamtgewicht des Zeolithen bezogen sind.

6. Abgasnachbehandlungssystem nach einem der Ansprüche 1 bis 5, **dadurch gekennzeichnet, dass** es sich bei dem TT-SCR um ein monolithisches Durchflusssubstrat mit einer manganhaltigen Beschichtung als katalytisch aktiver Schicht handelt.

7. Abgasnachbehandlungssystem nach Anspruch 6, wobei es sich bei der manganhaltigen Beschichtung um ein manganhaltiges Mischoxid handelt, ausgewählt aus

- Mischoxiden der allgemeinen Formel $Mn_aMe_{1-a}O_b$, worin es sich bei Me um ein oder mehrere Elemente aus der Gruppe Fe, Co, Ni, Cu, Zr, Nb, Mo, W, Ag, Sn, Ce, Pr, La, Nd, Ti und Y handelt und worin a = 0,02-0,98, und b = 1,0-2,5 sind,
- Mischoxiden der allgemeinen Formel $Mn_wCe_xMe_{1-w-x}O_y$, worin es sich bei Me um ein oder mehrere Elemente der aus der Gruppe Fe, Co, Ni, Cu, Zr, Nb, Mo, W, Ag, Sn, Pr, La, Nd, Ti und Y handelt und worin w = 0,02-0,98, x =0,02-0,98, und y =1,0-2,5 sind,
- Spinellen der allgemeinen Formel $MnMe_2O_4$ oder $MeMn_2O_4$, worin es sich bei Me um Fe, Al, Cr, Co, Cu oder Ti

8. Abgasnachbehandlungssystem nach einem der Ansprüche 1 bis 7, **dadurch gekennzeichnet, dass** unmittelbar vor dem TT-SCR ein weiteres Reduktionsmittel-Zufuhrsystem angeordnet ist.

9. Abgasnachbehandlungssystem nach einem der Ansprüche 1 bis 8, **dadurch gekennzeichnet, dass** das Reduktionsmittel-Zufuhrsystem a) eine Reduktionsmittelquelle, b) eine Reduktionsmittelpumpe und c) eine Reduktionsmittelabgabevorrichtung oder eine Reduktionsmitteleinspritzvorrichtung enthält.

10. Abgasnachbehandlungssystem nach einem der Ansprüche 1 bis 9, **dadurch gekennzeichnet, dass** sich unmittelbar stromaufwärts vor dem Reduktionsmittel-Zufuhrsystem, welches unmittelbar stromaufwärts vor dem HT-SCR befindet, ein Oxidationskatalysator befindet.

11. Abgasnachbehandlungssystem nach Anspruch 9, **dadurch gekennzeichnet, dass** sich zwischen dem HT-SCR, vor dem sich ein Reduktionsmittel-Zufuhrsystem befindet, und dem Temperatursensor ein weiterer HT-SCR befindet.

12. Abgasnachbehandlungssystem nach Anspruch 9, **dadurch gekennzeichnet, dass** zwischen dem Oxidationskatalysator und dem Reduktionsmittel-Zufuhrsystem, das sich unmittelbar stromaufwärts vor dem HT-SCR befindet, ein katalytisch beschichteter Dieselpartikelfilter (CDPF) befindet.

13. Abgasnachbehandlungssystem nach Anspruch 9 oder 11, **dadurch gekennzeichnet, dass** stromaufwärts zum Oxidationskatalysator ein oder mehrere HT-SCR angeordnet sind, wobei sich unmittelbar stromaufwärts zu demjenigen dieser beiden HT-SCR, der dem Verbrennungsmotor am nächsten ist, ein Reduktionsmittel-Zufuhrsystem befindet.

14. Abgasnachbehandlungssystem nach einem der Ansprüche 1 bis 13, **dadurch gekennzeichnet, dass** stromabwärts zum TT-SCR ein Ammoniak-Schlupfkatalysator angeordnet ist.

15. Verfahren zur Behandlung eines Abgasstroms, umfassend:

- Bereitstellen eines Abgasnachbehandlungssystems, das einen SCR-Katalysator für mittlere bis hohe Temperaturen (HT-SCR), einen stromabwärts zum SCR für mittlere bis hohe Temperaturen angeordneten Niedertemperatur-SCR (TT-SCR), einen unmittelbar hinter dem HT-SCR angeordneten Temperatursensor und ein unmittelbar stromaufwärts des Niedertemperatur-SCR angeordnetes Abgas-Bypass- und/oder Durchflussregulierungsventil umfasst,

- wobei der SCR-Katalysator für mittlere bis hohe Temperaturen sowohl dafür ausgelegt ist, wobei der mittlere Temperaturbereich Temperaturen von 250°C bis kleiner als 450°C und der hohe Temperaturbereich Temperaturen von 450°C bis 750° umfasst,

a) $NO_x$ in einem Abgas zu reduzieren, das eine Temperatur oberhalb eines Temperaturschwellenwertes hat,

als auch

b) über den Temperaturbereich des Abgases, der unterhalb eines Temperaturschwellenwerts liegt, das im Abgas enthaltene $SO_x$ zu speichern,

- und der Niedertemperatur-SCR dafür ausgelegt ist, $NO_x$ in einem Abgas zu reduzieren, das eine Temperatur unterhalb eines Temperaturschwellenwertes hat, wobei der Niedertemperaturbereich Temperaturen von 60°C bis kleiner als 250°C umfasst,
- und wobei der Temperatursensor die Temperatur des Abgasstroms misst, der den HT-SCR verlässt,
- und wobei das Abgas-Bypass-und/oder Durchfussregulierungsventil dafür ausgelegt ist, den Abgasstrom in seiner Gesamtheit am Niedertemperatur-SCR vorbeizuleiten, wenn dieser Abgasstrom eine Temperatur größer oder gleich einem Temperaturschwellenwert hat,

- Speichern des im Abgas enthaltenen $SO_x$ im HT-SCR,
- Reduktion von $NO_x$ in einem Abgasstrom mit dem Niedertemperatur-SCR-Katalysator, wenn eine Temperatur des Abgasstroms innerhalb eines niedrigen Temperaturbereichs liegt;
- Vorbeileiten des Abgasstroms in seiner Gesamtheit am Niedertemperatur-SCR, wenn dieser eine Temperatur größer oder gleich einem Temperaturschwellenwert hat, und
- Reduktion von $NO_x$ in einem Abgasstrom mit dem SCR-Katalysator für normale bis hohe Temperaturen, wenn die Temperatur des Abgasstroms innerhalb eines normalen bis hohen Temperaturbereichs liegt.

Fig. 1a

Fig. 1b

**Fig. 2**

Fig. 3a

Fig. 3b

Fig. 4a

Fig. 4b

Fig. 5

Fig. 6a

Fig. 6b

Fig. 7

Fig. 8

SO$_2$-Durchbruch nach Durchgang durch den Cu-baiserten HT-SCR

Fig. 9

SO$_2$-Durchbruch nach Durchgang durch den Cu-basierten HT-SCR

Fig. 10

**NO$_x$-Umwandlung des Cu-HT-SCR während der Schwefelexposition**

Fig. 11

**NO$_x$-Umwandlung von V-HT-SCR und Cu-HT-SCR**

Fig. 12

SO$_2$-Durchbruch bei V-HT-SCR und Cu-HT-SCR

**Europäisches Patentamt**
**European Patent Office**
**Office européen des brevets**

**EUROPÄISCHER RECHERCHENBERICHT**

**Nummer der Anmeldung**

EP 17 20 7691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/058999 A1 (ETTIREDDY PADMANABHA REDDY [US] ET AL) 10. März 2011 (2011-03-10) * Zusammenfassung; Abbildungen 2-3 * ----- | 1-15 | INV. F01N3/20 F01N13/08 |
| A | WO 2015/179720 A1 (TENNECO AUTOMOTIVE OPERATING [US]) 26. November 2015 (2015-11-26) * Abbildung 3 * ----- | 1-15 | |
| A | EP 1 321 641 A1 (ISUZU MOTORS LTD [JP]) 25. Juni 2003 (2003-06-25) * Abbildung 2 * ----- | 1-15 | |
| A | US 2016/032803 A1 (ETTIREDDY PADMANABHA REDDY [US] ET AL) 4. Februar 2016 (2016-02-04) * Zusammenfassung; Abbildung 3 * ----- | 1-15 | |

**RECHERCHIERTE SACHGEBIETE (IPC)**

F01N

Der vorliegende Recherchenbericht wurde für alle Patentansprüche erstellt

| Recherchenort | Abschlußdatum der Recherche | Prüfer |
|---|---|---|
| München | 21. März 2018 | Seifert, Marco |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 7691

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2018

| Im Recherchenbericht angeführtes Patentdokument | Datum der Veröffentlichung | Mitglied(er) der Patentfamilie | Datum der Veröffentlichung |
|---|---|---|---|
| US 2011058999 A1 | 10-03-2011 | DE 112010003613 T5<br>US 2011058999 A1<br>WO 2011032020 A2 | 08-11-2012<br>10-03-2011<br>17-03-2011 |
| WO 2015179720 A1 | 26-11-2015 | CN 106460611 A<br>DE 112015002447 T5<br>US 2015337702 A1<br>WO 2015179720 A1 | 22-02-2017<br>30-03-2017<br>26-11-2015<br>26-11-2015 |
| EP 1321641 A1 | 25-06-2003 | DE 60200714 D1<br>DE 60200714 T2<br>EP 1321641 A1<br>JP 3876705 B2<br>JP 2003184542 A<br>US 2003110761 A1 | 12-08-2004<br>21-07-2005<br>25-06-2003<br>07-02-2007<br>03-07-2003<br>19-06-2003 |
| US 2016032803 A1 | 04-02-2016 | US 2016032803 A1<br>WO 2016018778 A1 | 04-02-2016<br>04-02-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112011003613 T5
- WO 2016028290 A1
- WO 2016018778 A1
- DE 10101364 A1
- WO 2008119492 A1
- US 20110206584 A1
- EP 1938893 A2
- US 5120695 A
- WO 02100520 A1
- EP 0559021 A2

**In der Beschreibung aufgeführte Nicht-Patentliteratur**

- **JUNHUA LI ; HUAZHEN CHANG ; LEI MA ; JIN-MING HAO ; RALPH T. YANG.** Low-temperature selective catalytic reduction of NOx with NH3 over metal oxide and zeolite catalysts- A review. *Catal Today 2011,* vol. 175, 147-156
- **CHANG LIU ; JIAN-WEN SHI ; CHEN GAO ; CHUN-MING NIU.** Manganese oxide-based catalysts for low temperature selective catalytic reduction of NOx with NH3: A review. *Appl Catal A,* 2016, vol. 522, 54-69
- Urea-SCR Technology for deNOx After Treatment of Diesel Exhausts. Fundamental and Applied Catalysis. Springer-Verlag, 2014, 123-147